# EUROPEAN PATENT APPLICATION

(11) **EP 4 586 700 A2**
(43) Date of publication of application: **16.07.2025**
(21) Application number: 25179802.1
(22) Date of filing: 11.10.2022
(51) Int. Cl.: H04W 52/02

(54) **WIRELESS NETWORK AND OPERATING METHOD**

(30) Priority: 11.10.2021 GB 202114493
(62) Divisional of application: 22793473.4
(71) Applicant: Essence Security International (E.S.I.) Ltd., 4672530 Herzlia Pituach (IL)
(72) Inventor: Amir, Ohad, 4642300 Herzlia (IL); Schnapp, Jonathan Mark, 6451234 Tel Aviv (IL); Karsenty, Yaakov, 7174704 Modi'in (IL)
(74) Representative: Marks & Clerk LLP

(57) **Abstract**

A sensing device for operating as a device of a plurality of devices at a site, and comprising at least one sensor for sensing an event. Responsive to sensing the event, the sensing device is configured to communicate, using a communications system, an event notification for a remote computing system. The communication comprises transmission from the sensing device of a WAN address for locating the computing system, and/or an identifier for looking up said address. The sensing device, responsive to sensing an event: communicates a wireless signal for at least one other device of the plurality of devices at the site to perform a wakeup response comprising exiting from a low power mode; and transmits an event notification to the computing system, the event notification being transmitted with one or both of: a WAN address for reaching the computing system or an identifier for looking up the WAN address.

## Description

### RELATED APPLICATION

This application claims the benefit of priority of Great Britain Patent Application No. 2114493.6 filed on 11 October 2021, the contents of which are incorporated herein by reference in their entirety.

### FIELD

The present disclosure is concerned with wireless networks, and a method of operating a wireless network.

### BACKGROUND

Historically, security, home automation and health/care monitoring systems communicate with a remote server via a control hub, such as a control panel, installed at the site of the end-user. The control hub communicates with a plurality of peripheral devices of the system that are also at that site. The peripheral devices detect various events that occur at the site using sensors that receive input from the environment at the site. Examples of such sensors include motion sensors, door/widow sensors, fall sensors, distress devices and the like. The devices that contain these sensors are herein referred to as sensing devices.

In some implementations, the sensing devices are 'wirelessly wakeable devices' in that they may be devices which are configured to be ordinarily in a power saving mode, also referred to herein as a low power mode, but wakeable in response to a wirelessly communicated signal satisfying certain criteria. While in the power saving mode, one or more components of the sensing device, such components being referred to herein as 'sleep components' or 'off components', is placed in a sleep or low-power mode (e.g. sleep, deep-sleep) or off mode. An example of such a sleep component may be a processor, such as a central processing unit (CPU) or part thereof, of the sensing device, which is placed in a sleep or off mode while the sensing device is in the power saving mode. The device may also include a communications module, which may be a sleep component. The communications module may be separate from that processor, or may be a part of that processor, but in either case the communications module may repetitively switch between operable and inoperable states while that processor of part thereof (e.g. the CPU or part thereof) remains all the while in a sleep mode. The communications module may, for example, alternate between powered down and powered up states. For example, the communications module may be repetitively powered down for a defined non-listening period of time and then automatically powered up for a further defined listening period of time at the expiry of the non-listening period of time. In some implementations, the control hub may transmit a wake up signal to wake the sensing device so as to be detectable by the listening device during the listening period. If a beginning of a wake up signal is received during the listening period, this may be recognised by the communications module, e.g. based on receiving a preamble of the wake up signal, and in some implementations a header of the wake up signal. The communications module may then waken the sleep component (in the above example, the CPU or a part thereof) in response, at least for long enough for the woken component to read and analyse the wake up signal to determine whether the wakeup signal obliges that device to perform a wakeup response, whereby it is to perform a specified task subsequent to receiving the wakeup signal. Such a task may be provided in a payload of the wakeup signal or of a signal that follows it, which would generally be before the next listening period. In the absence of such a wakeup response needing to be performed, the sleep component automatically returns to its sleep or off mode. If the beginning of a wake up signal had not been not received during the listening period, then the communications module automatically powers back down at the end of the listening period. Thus, to read the payload the sensing device must exit the low power mode to operate in a higher powered mode that has a higher power consumption than the low power mode. Similarly, to perform the task the sensing device must operate in a higher powered mode, which may optionally be a different higher powered mode than to read the payload.

In some implementations, the wake up signal and communications module operate whereby the wakeup signal is addressable to a specific one or more devices and that the communications module can determine whether the wake up signal is addressed to it prior to waking the sleep component to read the payload. In other implementations, the sleep component must wake even to determine whether the wake up signal is addressed to it.

In the power saving mode, the sensing device is sufficiently operational to still sense the event for which they are intended to sense using the sensor of the sensing device. The sensing device is configured to wake up, by waking a sleep or off component of the device, upon sensing the event and transmit a notification of the event to the control hub. The control hub can then decide what action to take in response to the notification from the sensing device and, if appropriate, command the sensing device itself or another device to take an action. The device that takes the action is referred to herein as an action device. As indicated, the action device may be the device that sensed the event or another device, or a combination of both. The action device may have a power saving functionality like the sensing device, and may thus be woken by a wake up signal from the control hub in the same manner as described above. Optionally in some cases the control hub may consult a remote server before commanding the action.
The commanded actions (also referred to herein as "action responses") could include verification actions and/or output actions. Verification actions may include capturing one or more images using a camera (e.g. visual, near-IR or thermal); capturing radar or another ranging and/or doppler based active-reflected wave device (e.g. sonar or lidar) information, or the like. In general, a verification action may be used to verify that a conclusion based on the original sensed event, such as a conclusion that the original sensed signal is indicative of an intrusion or other assumed threat, was correct. The output actions may vary depending on the application. However, they may, in any case, be considered an action to affect a change in the environment. Such action items are intended to refer to actions that result in a human-noticeable effect, generally immediately. Therefore, the output actions that make a device an action device, as referred to herein, are not intended to include, for example, transmitting an RF signal to communicate with another device, nor upgrading of software or performing a calculation. For security systems, the output actions may be deterrent actions for encouraging a person affected by the action to leave or desist in an activity, for example, by providing a deterrent action intended to result in physical discomfort and/or physical challenge (e.g. by outputting of a light-obscuring material such as fog or smoke, or a dizzying or irritating stimulant, etc.) and/or may be alerting/notifying actions (e.g. sounding a siren or flashing a light). **In** the case of a health monitoring system, the output actions may include outputting an audio wave (e.g. a real-time voice signal from a phone call; a recorded/stored audio message; or the like). In the case of home automation one or more room lights, sound systems, televisions, air-conditioners, or the like may be turned on.

In cases where the device performing the action (i.e. the action device) is not the device that sensed the event, there are power consumption and/or telecommunication challenges in communicating with the device. Given that the action device will usually not need to be performing the action, i.e. it generally only performs the action responsive to detection of an event by the sensing device, the action device may advantageously be kept by default in a power saving mode, such as described above. This is particularly beneficial in battery powered wireless devices that do not receive mains power or wired data communication. The action device may be woken by the control hub sending a signal to wake it up. There are various technique for doing this such as wake on radio and wake on beacon.

With wake on beacon, the device that does the waking (the control hub) periodically transmits beacons to the sleeping device (e.g. the action device) to be heard during a periodic listening interval of the sleeping devices. When wakeup is needed, the beacons are configured as wakeup signals for causing a wakeup response comprising performance of a wakeup response task. Thus, the sleeping devices need to be synchronized with the device that does the waking. For wake on radio, rather than sending a beacon, the device that does the waking transmits a wake up signal that has a long preamble, the preamble having a length at least as long as the period for which each wirelessly wakeable device wakes to listen for it. Therefore, no synchronization is required. As will be appreciated from the discussion above, a communications module of the wirelessly wakeable device is temporarily activated for a short duration to listen for the signal, but the automatically returns to sleep if it doesn't hear the wake up signal (or optionally if the wake-up signal is not addressed to it).

In response to receiving a wakeup signal for it, a wirelessly wakeable device is configured to perform a wakeup response that includes waking up and enacting a wakeup response task.

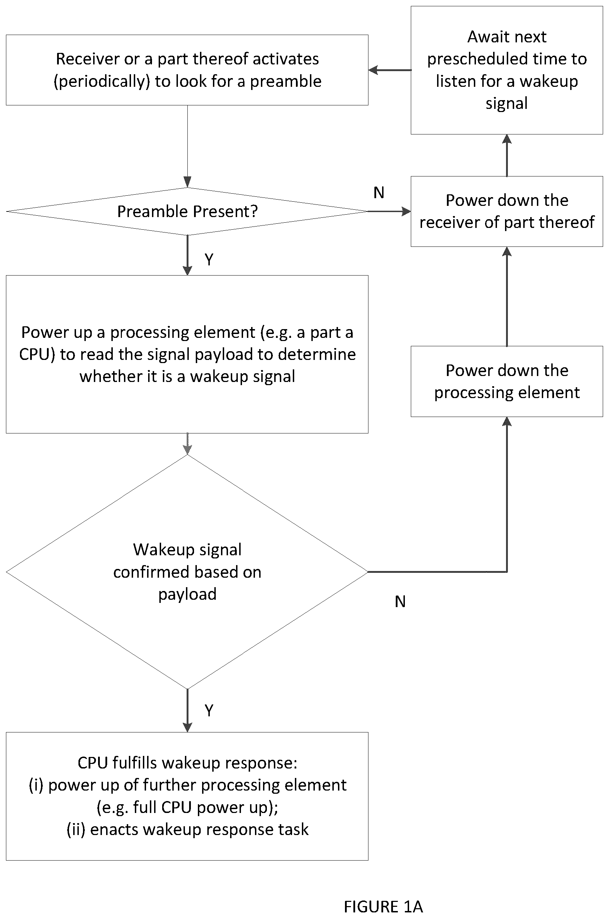

Although any known technique for waking a wirelessly wakeable device may be employed, some example flow charts are provided in Figures 1A-1D, for various wirelessly wakeable device designs.

Figure 1A shows one example in which a wirelessly wakeable device is configured to perform a wake-up response in a non-selective manner, i.e. all wirelessly wakeable devices that receive the wakeup signal perform the wakeup response. In this particular example, partial power up occurs in response to detecting a preamble, but the wakeup response is fulfilled (performed through to completion) by completing power up and enacting a wakeup response task only if the device verifies, based on a payload of the signal, that the signal is indeed a signal for which a wakeup is intended.

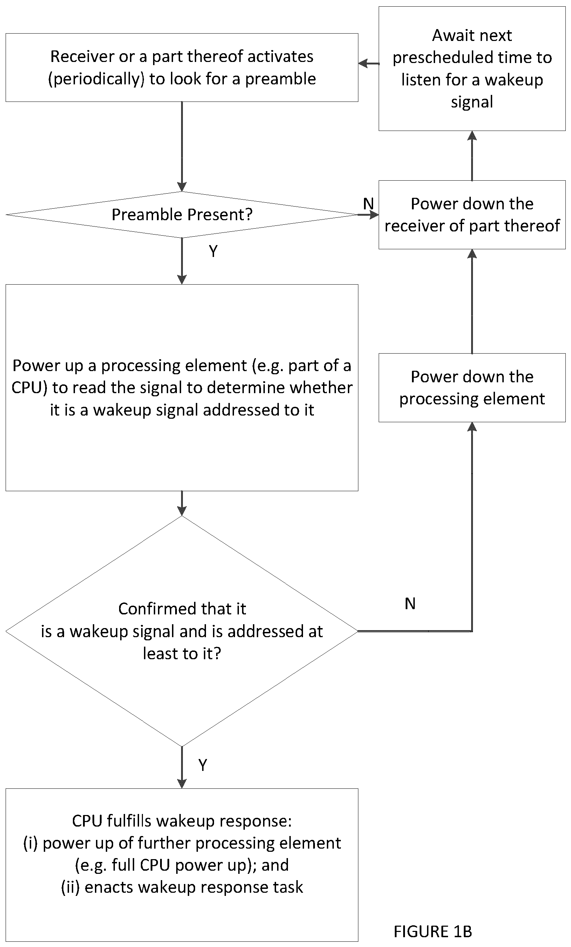

Figure 1B shows one example in which a wirelessly wakeable device is configured to perform a wake-up response in a device-selective manner, i.e. only addressed wirelessly wakeable devices fulfil the wakeup response. In this particular example, the wakeup response is fulfilled (by completing power up and performing the wakeup response task) only if device verifies, based on a payload of the signal, that it is a signal for which a wakeup is intended and the device determines, based on the payload and/or a header of the signal, that it has been selected from amongst other wirelessly wakeable devices to wake up.

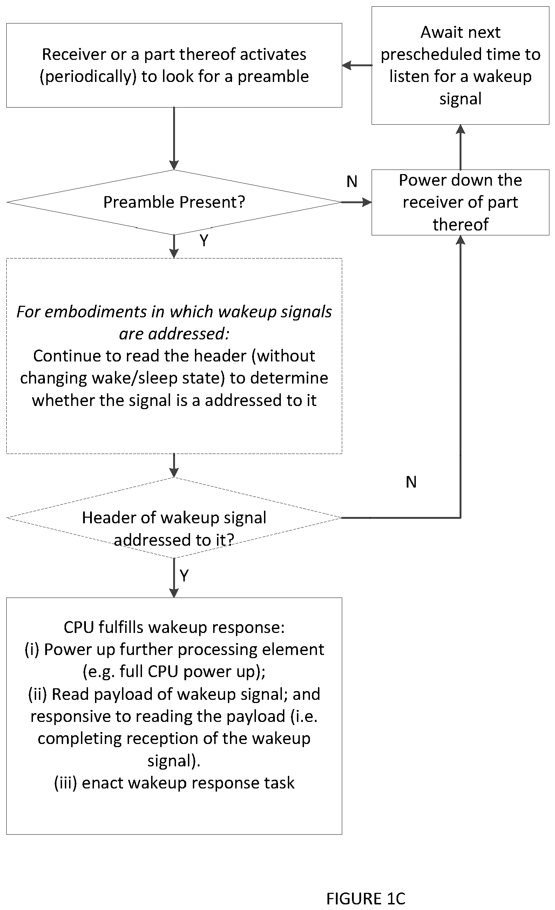

Figure 1C shows one example in which a full wakeup of the device occurs in response to identifying receipt of a part of a wakeup signal (e.g. its preamble) or in embodiments in which a header of the signal includes device addressing, in response to both identifying receipt of a part of a wakeup signal and additionally identifying that the device is addressed. The optional steps are shown in dashed outline. The device may then proceed to read the payload and completes performance of the wakeup response task.

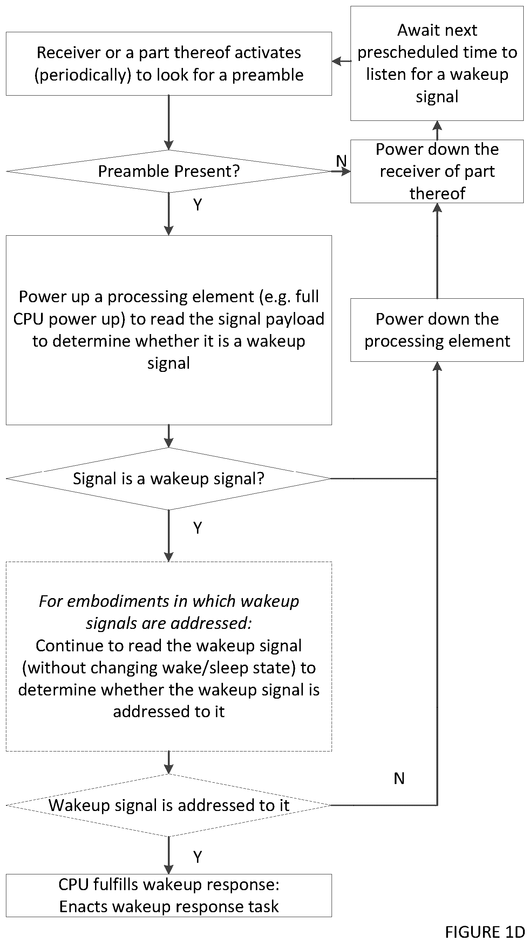

Figure 1D shows one example in which full wakeup (i.e. full power up) occurs in response to receiving a part of a wakeup signal, e.g. the preamble, and the rest of the signal is thereafter read. If, based on reading the rest of the signal, the signal is confirmed to be a wakeup signal, and in some embodiments only if that device is also addressed, a wakeup response task is performed is then performed by the device.

In each of these examples, the device may return to the low power mode after performing the response task by powering down a receiver of part thereof, and powering down a further processing element, or by a single power down step.

In addition to communicating with the sensing devices and actions devices, the control hub may also have a rules engine that defines certain rules for what to do in response to the sensed events, e.g. what action devices to command to take action and in what scenarios.

There is a desire by the present inventors to provide a system that does not have a control hub at the site. This raises various challenges that need to be overcome. The presentation invention addresses at least one of such challenges and/or other problems of the prior art.

Reference to any prior art in this specification is not an acknowledgement or suggestion that this prior art forms part of the common general knowledge in any jurisdiction, or globally, or that this prior art could reasonably be expected to be understood, regarded as relevant/or combined with other pieces of prior art by a person skilled in the art.

### BRIEF DESCRIPTION OF THE SEVERAL VIEWS OF THE DRAWINGS

Figures 1A-D are flow charts illustrating various examples in which a wirelessly wakeable device may be woken to perform a response;
Figure 2 is a schematic illustration of a wireless communication network;
Figure 3 is a schematic illustration of an exemplary sensing device of the network illustrated in Figure 2;
Figure 4 is a schematic illustration of an exemplary action device of the network illustrated in figure 2;
Figure 5 is a diagram illustrating a method of operation of the network illustrated in figure 2;
Figure 6 is a schematic illustration of another wireless communication network;
Figure 7 is a diagram illustrating a method of operation of the network illustrated in figure 6;
Figure 8 is a schematic illustration of a further wireless communication network;
Figure 9 is a diagram illustrating a method of operation of the network illustrated in figure 8;
Figure 10 is a schematic illustration of a further wireless communication network;
Figure 11 is a diagram illustrating a method of operation of the network illustrated in figure 10; and
Figure 12 is a diagram illustrating another method of operation of the network illustrated in figure 10.

### DESCRIPTION OF EMBODIMENTS

In general terms, the present disclosure relates to implementing a networked system at a site, where the networked system is without a coordinating control hub (e.g. control panel) at the site. At least some functionality conventionally associated with the on-site control hub is implemented by a remote server that is not located at the site. At least some of the functionality conventionally associated with the on-site control hub is implemented by one or more devices at the site.

A first aspect of the disclosure provides a system comprising a plurality of devices configured for use at a site, the plurality of devices comprising one or more sensing devices; and one or more other devices for performing an action commanded by a remote computing system. Each of the plurality of devices may be configured to periodically send a proof-of-alive signal to the remote computing system on a wide area network, WAN. The proof of alive signal may comprise at least one of: a WAN address of the remote computing system and/or an identifier for determining the WAN address. Each of the one or more sensing devices comprises at least one sensor for sensing an event and a communications system for communicating a wireless signal for at least one of the one or more other devices of the plurality of devices at the site to perform a wakeup response. The wake up response comprises exiting from a low power mode. Each device of the one or more other devices is configured to exit from the low power mode responsive to receiving at least part of a wireless signal for the device to perform the wakeup response from a device of said sensing devices.

Depending on the embodiment, the commanding of the action by the server may be received by the one or more other devices being part of the WAN (for example the based a communication comprising WAN addresses of the respective one or more other devices or comprising identifiers for determining the respective WAN addresses) or may be received in a payload received from a sensing device but where the payload is authenticatable as being from the remote computing system. In this manner, operation without a local (e.g. installed in the site) control hub is supported. Further, other functions that may normally be performed by local control hubs, for example monitoring for proof-of-alive signals from the respective device the local control would have been responsible for controlling, may optionally be performed by a different device, which may optionally, albeit beneficially, be the remote computing system.

In some embodiments, all of the one or more sensing devices can signal the one or more other devices to exit from the low power mode. For example, the wireless signal for the at least one of the one or more other devices may be configured to cause all of said other devices to perform a wakeup response. In other embodiments, the wireless signal for the at least one of the one or more other devices is configured to cause a subset of one of more of the other devices to perform a wake up response. Thus, it may be that the occurrence of the event leads to only the subset performing the wake up response.

The wireless signal may comprise a packet or a plurality of packets. The wireless signal may correspond to an exit signal as described herein.

Any or all of the plurality of sensing devices may be able to signal the one or more other devices to exit from the low power mode.

The one or more other devices may be action devices, e.g. configured to take an action responsive to the sensing of the event. The action device may comprise at least one action system that is operable to perform the action responsive to or dependent on the sensing of the event. The action system may comprise at least one deterrent device. The action system may comprise a siren and/or flashing light that acts as an alarm. The deterrent device may comprise an emission device for emitting light obscuring material, such as a smoke generator. The deterrent device may comprise a chemical or irritant emission system. The action system may comprise a verification device, such as a camera, or a radar, LIDAR, sonar or other wave emission and reflection detection device. The action system may comprise a voice output system. The action system may comprise a light or other illumination system, or an electrical appliance, or a heating, cooling or ventilation system, or the like.

The one or more other devices may be different or separate to, e.g. spaced apart from and not physically connected (including not electrically connected) to, the sensing devices that sense the event that the action is responsive to. The action device may be operable as both a sensing device and the action device. The action device may comprise a sensor and may operable as a sensing device but also comprises the action system. The action device may be configured to operate the action system responsive to the sensing of the event by a different sensing device, which may be even if the sensor of the action device performing the action does not detect the event.

The sensor of at least one of the one or more sensing devices may comprise a motion or presence sensor for sensing motion or presence of a living entity. The sensor of at least one of the one or more sensing devices may comprise a passive infra-red (PIR) motion or presence sensor. The sensor of at least one of the one or more sensing devices may comprise an open-close sensor for detecting opening or closing of an opening, such as a door or window.

One or more or each of the plurality of devices configured for use at the site may comprise a power storage or generation system for powering the device in use, such as a battery or other electrochemical power providing device, capacitor or other electrostatic power providing device, solar panel or other power conversion device, and/or the like. One or more or each of the plurality of devices configured for use at the site may be wireless, e.g. without any wired power or wired data connections.

The communication system may be configured to communicate the wireless signal using a communications protocol that requires lower power or energy to listen than the power or energy required to listen for at least one or each of: a GSM, 3G (e.g. UMTS), 4G (e.g. LTE), 5G, other cellular communication protocol or a Wi-Fi (i.e. according to IEEE 802.11) wake-up signal or for a lowest power or energy consuming one thereof. This arrangement may provide beneficial power consumption characteristics, particularly when the sensing devices do not have wired power connections.

The networked system may comprise the remote computing system that is located remotely from the site. The remote computing system may be or comprise a server. One or more or each of the one or more sensing devices may be configured to transmit an event notification to the remote computing system responsive to the sensing of the event. The event notification may be transmitted to the remote computing system before the one or more or each of the one or more sensing devices communicate the wireless signal for the one or more other devices of the plurality of devices at the site. The event notification may be transmitted with one or both of: a WAN address for reaching the remote computing system or an identifier for looking up the WAN address. The identifier for looking up the wide area network address may be or comprise a domain name.

The remote computing system may be configured to, responsive to receiving the event notification from the one or more or each sensing device, determine at least one action parameter. The at least one action parameter may comprise at least one or each of: an instruction to wake at least one of the one or more other devices; an indication of which at least one of the one or more other devices is to perform an action; and/or an indication of the action at least one of the one or more other devices is to perform. The remote computing system may be configured to communicate the at least one action parameter to at least one of the one or more sensing devices from which the event notification was received and/or the one or more other devices. The at least one action parameter may comprise at least the indication of which other device is to perform the action. The remote computing system may be configured to communicate the at least one action parameter to at least one or each of the one or more sensing devices. The at least one or each of the one or more sensing devices may be configured to, responsive to receiving the at least one action parameter, communicate the wireless signal for the at least one of the one or more other devices of the plurality of devices indicated in the at least one action parameter to perform a wakeup response.

Each of the one or more other devices may be configured to, responsive to receiving the wireless signal for the device perform a wakeup response comprising exiting from a low power mode, transmit a signal to, or otherwise communicate with, the remote computing system via a wide area network to enable the remote computing system to instruct in reply an action to perform. The signal transmitted by the one or more other devices may correspond to an action request or request for action as described herein. The one or more other devices may be configured to, responsive to wirelessly receiving the action to perform from the remote computing system via the WAN, perform the action.

The remote computing system may be configured to communicate the at least one action parameter to the one or more sensing device. At least one or each of the one or more sensing devices is configured to, responsive to receiving the at least one action parameter, communicate to the at least one of the one or more other devices the wireless signal to perform the wakeup response and, in and/or following the wireless signal, the at least one action parameter to the one or more other devices. The action parameters may comprise at least the indication of which at least one other device is to perform the action and the indication of the action to be performed. The remote computing system may be configured to communicate the action parameters to at least one or each of the one or more sensing devices, e.g. only to those of the one or more sensing devices that sensed the event. The communication of the at least one action parameter may comprise communicating the indication of the action to be performed to at least one of the one or more other devices of the plurality of devices that are indicated in the at least one action parameter.

The one or more or each of the plurality of sensing devices may be configured to communicate with the remote computing system using a different communications protocol to a communications protocol used to communicate the wireless signal to the one or more other devices. The communications protocol used by the one or more or each of the plurality of sensing devices to communicate the wireless signal to the one or more other devices may require lower power or energy to listen for the wireless signal than the power or energy required to listen for the communication to the remote computing system using the different communications protocol. This arrangement may provide beneficial power consumption characteristics, particularly when the sensing devices do not have wired power connections.

The communications protocol with which the wireless signal is communicated to the one or more other devices may comprise a Bluetooth Low Energy (BLE) advertisement. The communication protocol used by the one or more or each of the plurality of sensing devices to communicate with the remote computing system consists of one or more of: GSM, 3G, 4G, 5G, another cellular communication protocol or Wi-Fi. This arrangement may provide beneficial power consumption characteristics, particularly when the sensing devices do not have wired power connections.

The communications systems of the sensing devices may be configured to communicate the signal directly to the at least one other device without being relayed by an intermediate apparatus such as a local control hub or panel located at the site, a relay device, a Wi-Fi router, a modem, a cellular network base station, and/or the like.

Each device of the one or more other devices may be configured to, responsive to receiving the wireless signal for the device to perform a wakeup response, wirelessly transmit an event notification to the remote computing system. The event notification may comprise a WAN address of the remote computing system and/or an identifier for determining the WAN address. Each device of the one or more other devices may be configured to, subsequently to transmitting the event notification to the remote computing system, wirelessly receive from the remote computing system an indication of the action to be performed by device in response to the sensing of the event by the one or more sensing devices.

The remote computing system may be configured to transmit an authenticable payload to the one or more or each sensing device, responsive to receiving the communication from the one or more or each sensing device. The payload may be authenticatable as being from the remote computing system. The one or more or each sensing device may be configured to communicate the authenticatable payload that is authenticatable as being from the remote computing device to at least one of the one or more other devices. The at least one of the one or more other devices may be configured to authenticate that the authenticatable payload came from the remote computing system. The at least one of the one or more other devices may be configured to authenticate that the authenticatable payload came from the remote computing system by authenticating a signature, e.g. a digital signature, associated with the payload. The authenticatable payload may be encrypted, e.g. using public - private key or other form of asymmetric encryption. The encryption may be selected to allow authentication of the authenticatable payload. However, other mechanisms for authenticating the origin of payload as being the remote server are possible.

At least one of the action parameters may comprise the indication of the action that the at least one other device is to perform and may be included in the authenticatable payload.

The system may include a plurality of the other devices and at least one or both of: the instruction to wake the at least one other device is an instruction to wake a subset of one or more but less than all of the plurality of other devices; and/or the indication of which at least one of the one of more other devices is to perform an action may be an indication of a subset of one or more but less than all of the plurality of other devices.

The at least one sensor may comprise at least one of: a motion or presence sensor and/or a door or window opening sensor.

The wireless signal for the one or more other devices of the plurality of devices to perform a wakeup response may be transmitted by an asynchronous communication. The wireless signal for the one or more other devices of the plurality of devices to perform a wakeup response may comprise a Bluetooth Low Energy (BLE) advertisement or a signal for performing a wake-on-radio response at the one or more other devices. Advantageously the wireless signal may, more particularly, comprise a BLE advertisement.

The low power mode may be a mode in which the other device automatically alternates between a sleep state or at least partially shut down state and an awake, or at least partially or fully powered up state unless the signal to exit from the low power mode is received. The low power mode may be a mode in which the other device automatically alternates between a listening mode where the other device can receive and implement communication signals and a non-listening mode in which the other device can't receive or implement communications signals unless the signal to exit from the low power mode is received. The low power mode may be a mode in which the other device automatically alternates between the sleep state for a predefined period of time and the awake or listening state for a predefined period of time unless the signal to exit from the low power mode is received. The listening state may be a state in which the other device can receive or implement communications signals.

The remote computing system may be configured to determine a status of the system set by a user. The status of the system may comprise an arming status of the system, e.g. that the system is armed or not armed. The remote computing system may be configured to determine the action the at least one of the one or more other devices is to perform based at least in part on the status of the system. The remote computing system may be configured to determine a different action to perform if the status of the system is that the system is armed relative to when the status of the system is not armed.

The remote computing device may be configured to implement logic to determine at least one of: which action device or subset of the action devices should perform the action and/or the action to be performed, e.g. based on at least one of: a type of event detected, identifiers of the one or more sensing devices that sensed the event, locations of the one or more sensing devices that sensed the event, locations of the at least one action device, the status of the system (e.g. armed or not armed), the time of day, the date, and/or the like. The logic may be implemented using a look up table, algorithm, machine learning, or the like.

According to a second aspect of the present disclosure is a sensing device for operating as a device of a plurality of devices at a site, the sensing device comprising at least one sensor for sensing an event; and a communications system. The sensing device may be configured to, responsive to sensing the event, communicate, using the communications system, an event notification for a remote computing device, which may be over a wide area network. The communication may comprise transmission from the sensing device of (i) a wide area network (WAN) address for locating the remote computing device, and/or (ii) an identifier for looking up said address. The sensing device may be configured to receive a response from the remote computing system after the event notification has been communicated. The sensing device may be configured to, based on the response from the remote computing system, communicate, using the communications system, a signal for at least one other device of the plurality of devices at the site to perform a wakeup response comprising exiting from a low power mode.

The sensing device may be configured to communicate, using the communications system, the signal for at least one other device of the plurality of devices at the site to perform the wakeup response responsive to the response from the remote computing system comprising an instruction to wake up the at least one other device.

The response from the remote computing system may comprise an authenticatable payload that is authenticatable as being from the remote computing system. The sensing device may be configured to communicate the authenticatable payload that is authenticatable as being from the remote computing system to the at least one other device. The authenticatable payload may comprise an indication of the action the other device is to perform. The communications system may be configured to communicate the signal directly to the at least one other device without being relayed by an intermediate apparatus, such as a local control hub located at the site, a relay device, a Wi-Fi router, a modem, and/or the like. In this way the system may be made more secure and less prone to unauthorized intrusion.

Responsive to the response from the remote computing system comprising an instruction to wake up the at least one other device, the sensing device may be configured to communicate, using the communications system, the signal for at least one other device of the plurality of devices at the site to perform a wakeup response.

The communication system may be configured to communicate the signal using a communications protocol that requires lower power or energy to listen than the power or energy required to listen for at least one or each of: a GSM, 3G, 4G, 5G, other cellular communication protocol or Wi-Fi wake-up signal or for a lowest power or energy consuming one thereof.

The sensing device may be configured to communicate with the remote computing system using a different communications protocol to a communications protocol used to communicate the signal to the at least one other device. The communications protocol used by the sensing device to communicate the signal to the at least one other device may require lower power or energy to listen for the signal than the power or energy required to listen for the communication to the remote computing system using the different protocol. The communications protocol with which the signal is communicated may comprise a Bluetooth Low Energy (BLE) advertisement. The communication protocol used by the one or more or each of the plurality of sensing devices to communicate with the remote computing system comprises one or more of: GSM, 3G, 4G, 5G, another cellular communication protocol or Wi-Fi.

The at least one sensor may comprise at least one of: a motion or presence sensor and/or a door or window opening sensor.

According to a third aspect of the present disclosure is an action device for operating as a device of a plurality of devices at a site. The action device is configured to periodically transmit a proof-of-alive signal addressed to a remote computing system on a wide area network (WAN), e.g. by including a WAN address or an identifier for looking up the WAN address. The action device may be switchable between a lower power mode and a higher power mode. In the lower power mode, the action device may be configured to periodically listen for at least part or all of a wireless signal. The action device is configured to, responsive to receiving at least the part or all of a wireless signal for the action device, switch from the lower power mode to the higher power mode. The part of the wireless signal may comprise at least a preamble part of the wireless signal. The action device may be configured to switch from the lower power mode to the higher power mode responsive to receiving at least the preamble part of the wireless signal. The receiving of the at least part of the wireless signal may comprise receiving all of the wireless signal. The action device may be configured to switch from the lower power mode to the higher power mode responsive to receiving all of the wireless signal. The action device is configured to, responsive to receiving the wireless signal for the action device and a payload in or following the wireless signal from a sensing device of the plurality of the devices at the site, wherein the payload comprises at least one action the action device is commanded to perform, perform the at least one action, which may comprise at least one of: a deterrent action and/or a threat verification action. The action device may be configured to, responsive to receiving the wireless signal, transmit an action request to a remote server over a wide area network. The action device may be configured to, after transmitting the action request, listen for the payload containing at least an indication of an action to perform from the remote device. It will also be appreciated that an "action request" need not specify an actual request for an action, so long as transmitting the action request provides the server with an opportunity to provide an action command in reply. Thus the action request requesting an action as referred to herein may be alternatively be understood and referred to as a message to the remote computing device to inform the server that the action device is able to be communicated with and/or to inform the remote computing device that the action devices is ready to perform an action if commanded to do so by the remote computing device. This is significant because given that the action device would ordinarily be in a low power mode, it would not normally be possible for the server to provide an action command to the action device, but the action device is configured to stay awake and communicatively connected to the server for a predetermined amount of time after transmitting the action request in order to allow the action device to receiving a response from the server. The action request may establish a new connection or communication session between action device and the remote computing system.

The wireless signal for the action device may comprise any one of: a unicast signal selecting the action device; a multicast signal selecting the action device; and broadcast signal.

The proof-of-alive may or may not be transmitted with a constant period. However, at least one signal (preferably more than one signal) for proving the device is alive may be transmitted every predetermined period, which may be in the order of minutes, e.g. every 20 minutes in one example. The proof-of-alive signal may comprise a dedicated signal or may be any signal, e.g. it need not provide any function other than being received by the remote computing system and including an identifier for identifying the action device, so that the remote computing system thereby knows that that particular action device is still alive. However, preferably the proof-of-alive signal includes a status report for supervisory purposes. For example, the status report may include at least one or more or each of: an indication of battery level; an indication of link quality; an indication of temperature.

The lower power mode may be an intermittent or transient listening mode in which the action device intermittently or periodically listens for the wireless signal. The payload may be an authenticatable payload that is authenticatable as being from the remote computing system. The action device may be configured to receive the authenticatable payload from the remote computing system indirectly via the sensing device. The action device may be configured to receive the signal from the sensing device using a communications protocol that requires lower power or energy to listen than the power or energy required to listen for at least one or each of: a GSM, 3G, 4G, 5G, other cellular communication protocol or Wi-Fi wake-up signal or for a lowest power or energy consuming one thereof. The communications protocol with which the signal is communicated may comprise a Bluetooth Low Energy (BLE) advertisement.

The action device may be configured to perform a deterrent action. The action device may comprise at least one action system that is operable to perform the action responsive to or dependent on the sensing of the event. The action system may comprise at least one deterrent device. The action system may comprise a siren and/or flashing light that acts as an alarm. The deterrent device may comprise an emission device for emitting light obscuring material, such as a smoke generator. The deterrent device may comprise a chemical or irritant emission system. The action system may comprise a verification device, such as a camera, or a radar, LIDAR, sonar or other wave emission and reflection detection device. The action system may comprise a voice output system. The action system may comprise a light or other illumination system, or an electrical appliance, or a heating, cooling or ventilation system, or the like.

According to a fourth aspect of the present disclosure is a computing system. The computing system may be for servicing multiple devices at a site, the multiple devices comprising at least one sensing device and at least one action device. The computing system may be configured to act as a remotely located control hub for each device of the multiple devices. The acting as a remotely located control hub may include verifying, for each device of the multiple devices, that within a predefined period, at least one signal bearing a unique identifier of the device is received by the computing system over a wide area network, WAN. The acting as a remotely located control hub may include communicating with the sensing devices and action devices. The acting as a remotely located control hub may comprise the computing system comprising or implementing a rules engine that defines certain rules for what to do in response to sensed events, e.g. what action devices to command to take action and in what scenarios.

The computing system may be configured to: receive an event notification over the WAN, the event notification comprising a WAN address of a first device that transmitted the event notification. The computing system may be configured to identify, based on the event notification, which of the plurality of devices the notification was received from. The computing system may be configured to, responsive to the event notification, determine if an action is to be performed by one or more action devices. The computing system may be configured to, responsive to (i) an event defined in the event notification and (ii) which of said devices is identified, determine if an action is to be performed by one or more action devices. The computing system may be configured to, responsive to determining that the action is to be performed by the one or more action devices, transmit at least one indication comprising one or more of: an indication of the action, an indication of the one or more action devices to be used to perform the action and/or an indication that the one or more action devices are to be exited from a low power mode. The event notification may be received from at least one of the one or more action devices and, in response, the computing system may be configured to transmit the at least one indication.

The computing system may be configured for use remotely away from the site. The computing system may be or comprise a server, which may be configured to remotely communicate with the multiple devices at the site over the WAN.

The event notification may be received from at least one sensing device that is separate from, e.g. physically separated from or not physically connected to, the action devices. In response to receiving the event notification, the computing system may be configured to transmit the one or more of: the action and/or the at least one indication to the one or more sensing devices.

The multiple devices may comprise a plurality of sensing devices. Each sensing device may comprise: at least one sensor for sensing an event; and a communications system; wherein, responsive to sensing the event, the sensing device is configured to: communicate, using the communications system, an event notification.

The multiple devices may comprise a plurality of action devices for operating as deterrent and/or verification devices. The computing system may comprise or be configured to communicate with data storage that is configured to store (i) WAN addresses and/or (ii) identifiers for looking up said WAN addresses of all of said multiple devices. The computing system may be configured to upgrade software of each of the said multiple devices by communications that use a respective one or both of the WAN or the identifier for looking up the WAN. The data storage may be further configured to store an identifier for identifying the site and configuration information defining conditions upon which different actions are to be performed in response to which events occurring at the site, wherein said action is determined based on said configuration information and said event notification.

The event notification may be received from at least one of the one or more action devices. The computing system may be configured to transmit to the at least one of the one or more action devices the one or more of: the indication of the action, the indication of the one or more action devices to be used to perform the action and/or the indication that the one or more action devices are to be exited from a low power mode. The event notification may be received from at least one sensing device that is separate, e.g. not physically connected to or spaced apart from, the action devices. The computing system may be configured to transmit to the at least one sensing device the one or more of: the action, the indication of the one or more action devices to be used to perform the action and/or the indication that the one or more action devices are to be exited from a low power mode.

The computing system may be configured to transmit both the action and the indication of the one or more action devices to be used to perform the action to the at least one sensing device. The computing system may be configured to transmit the indication of the one or more action devices to be used to perform the action to the at least one sensing device. The computing system may be configured to, subsequently to transmitting the indication, receive a request for an action from the one or more action devices to be used to perform the action. The computing system may be configured to thereafter transmit at least the action to be performed to the one or more action devices. The computing system may be configured to transmit at least the action to be performed to the one or more action devices responsive to the receipt of the request for the action.

According to a sixth aspect of the present disclosure is a method of operating the networked system of the first aspect, the method comprising: sensing an event, e.g. using the sensor of at least one of the plurality of sensing devices. The method may comprise communicating a wireless signal from the at least one of the plurality of sensing devices for the one or more other devices of the plurality of devices at the site to perform a wakeup response comprising exiting from a low power mode.

According to a seventh aspect of the present disclosure is a method of operation of the sensing device of the second aspect, the method comprising: sensing an event; responsive to the sensing of the event, communicating, using the sensing device, an event notification for a remote computing device over a wide area network. The method may further comprise receiving a response from the remote computing system after the event notification has been communicated. The method may comprise, based on the response from the remote computing system, communicating, using the sensing device, a signal for at least one other device of the plurality of devices at the site to perform a wakeup response comprising exiting from a low power mode.

According to an eighth aspect of the present disclosure is a method of operation of an action device of the third aspect, the method comprising: when the action device is in the lower power mode, periodically listening for a wireless signal; and, responsive to receiving a wireless signal for the action device, switching the action device from a lower power mode to a higher power mode. The method may further comprise, responsive to receiving the wireless signal for the action device and a payload in or following the wireless signal, from a sensing device of the plurality of the devices at the site, wherein the payload comprises at least one action for the action device is commanded to perform, performing the at least one action.

According to a ninth aspect of the present disclosure is a computer program product configured such that, when implemented on a processing system, causes the processing system to perform any of the above methods.

Further aspects of the disclosure and embodiments therefor are disclosed in the clauses included herein. For example:
**In** another aspect of the disclosure, there is provided a system comprising a plurality of devices configured for use at a site, the plurality of devices comprising:
one or more sensing devices; and one or more other devices for performing an action commanded by a remote computing system; wherein each of the one or more sensing devices comprises at least one sensor for sensing an event and a communications system for communicating a wireless signal for at least one of the one or more other devices of the plurality of devices at the site to perform a wakeup response comprising exiting from a low power mode, wherein each device of the one or more other devices is configured to exit from the low power mode responsive to receiving at least part of a wireless signal for the device to perform the wakeup response from a device of said sensing devices, and wherein the one or more sensing devices is a plurality of sensing devices, wherein a device of said one or more other devices is wake-able by communication of the wireless signal by any one of the plurality of sensing devices.

In another aspect of the disclosure, there is provided a system comprising a plurality of devices configured for use at a site, the plurality of devices comprising:
one or more sensing devices; and one or more other devices for performing an action commanded by a remote computing system; wherein each of the one or more sensing devices comprises at least one sensor for sensing an event and a communications system for communicating a wireless signal for at least one of the one or more other devices of the plurality of devices at the site to perform a wakeup response comprising exiting from a low power mode, wherein each device of the one or more other devices is configured to exit from the low power mode responsive to receiving at least part of a wireless signal for the device to perform the wakeup response from a device of said sensing devices, and wherein the wireless signal is configured to trigger a plurality of the one or more other devices to perform wakeup responses.

In another aspect of the disclosure, there is provided a system comprising a plurality of devices configured for use at a site, the plurality of devices comprising: one or more sensing devices; and one or more other devices for performing an action commanded by a remote computing system; wherein each of the one or more sensing devices comprises at least one sensor for sensing an event and a communications system for communicating a wireless signal for at least one of the one or more other devices of the plurality of devices at the site to perform a wakeup response comprising exiting from a low power mode, wherein each device of the one or more other devices is configured to exit from the low power mode responsive to receiving at least part of a wireless signal for the device to perform the wakeup response from a device of said sensing devices,
and wherein the one or more of the other devices comprises at least one output-generating device for performing at least one deterrent output action.

**In** another aspect of the disclosure, there is provided a sensing device for operating as a device of a plurality of devices at a site, the sensing device comprising: at least one sensor for sensing an event; a communications system; wherein, responsive to sensing the event, the sensing device is configured to: communicate, using the communications system, an event notification for a remote computing device, the communication comprising transmission from the sensing device of (i) a wide area network (WAN) address for locating the remote computing device, and/or (ii) an identifier for looking up said address; wherein one or more or each of the one or more sensing devices, responsive to sensing an event:
(i) communicates a wireless signal for at least one other device of the plurality of devices at the site to perform a wakeup response comprising exiting from a low power mode; and
(ii) transmits an event notification to the remote computing system, the event notification being transmitted with one or both of: a WAN address for reaching the remote computing system or an identifier for looking up the WAN address.
Wherever possible, embodiments of any one aspect of the disclosure may optionally be applied to any other aspect of the enclosure.

Each of the action devices disclosed herein are wirelessly wakeable devices, which may be implemented using any of the power saving and wakeup techniques described herein, including in the "background" section, for example in accordance with any of Figures 1A-D. However, any other wakeup techniques known by the person skilled in the art may alternatively be employed. Optionally the sensing devices may also be wirelessly wakeable devices. However, in other embodiments the sensing devices may be incapable of being woken by a wireless communications signal.

In prior art device wirelessly wakeable devices, it is common for an on-site control panel to transmit wakeup signals to cause a wirelessly wakeable device to perform a wakeup response comprising performing a wakeup response task that consists of an action response such as described above. Such action responses may likewise be performed as the part of the wakeup response in the present disclosure. In the present disclosure other action responses may be additionally or alternatively performed as part of the wakeup response. In particular, in the present disclosure the wakeup signal is transmitted to an action device by a sensing device and the wakeup response task by the action device may comprise one or more of:
(i) initiating a communication with an offsite device (e.g. a server) to determine whether an action response is required and/or what action response is required, i.e. by transmitting an action request; and/or
(ii) performing an action response that has been predefined to occur in response to any wakeup;
(iii) performing an action response that is defined in the wakeup signal (e.g. in a payload of the wakeup signal;
(iv) listen for a further signal following the wakeup signal, each of which had been transmitted by a sensing device, wherein listening for the further signal occurs prior to the next time at which the device would have next listened for a wakeup signal had the device not woken, the further signal carrying a payload defining the action response.

It is preferable however, that for cases (ii) to (iv) that the action device only performs the action response if the action device is firstly able to authenticate that present performance of the action response is authorised by the off-site device without the action device having to directly communicate with the off-site device.

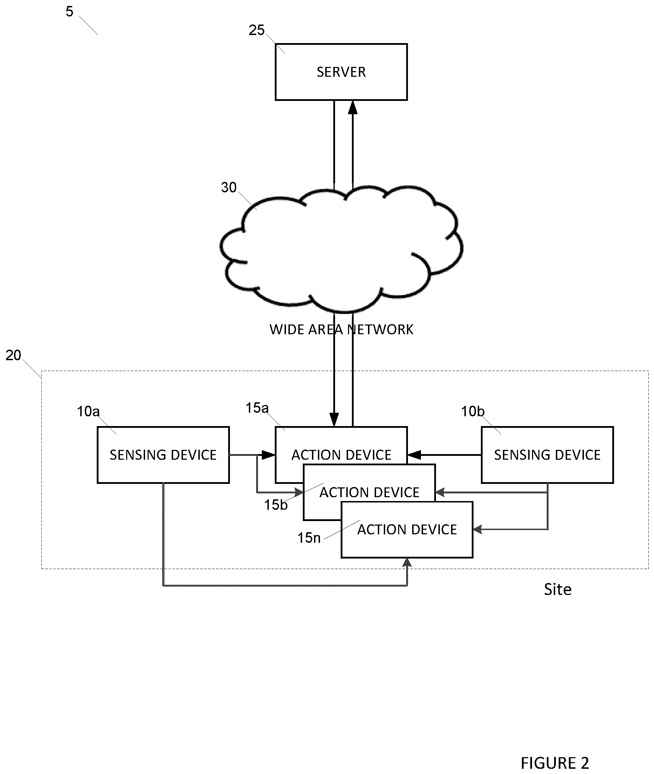

Figure 2 shows a networked system 5 comprising at least one sensing device, with two sensing devices 10a, 10b being shown in this example, and one or more action devices 15a, 15b, 15n located at a site 20, such as a building, house, office, building site or other defined location.

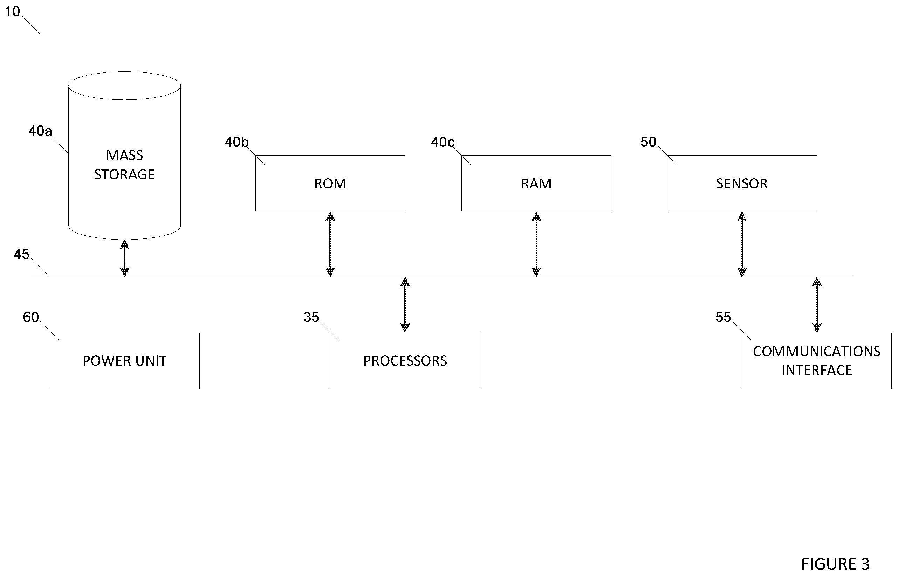

The sensing devices 10a, 10b comprise at least one sensor 50 (see Figure 3) and are configured to detect events occurring at the site 20 using their sensors 50. Examples of suitable sensing devices 10a, 10b include passive infra-red (PIR) or other detectors for sensing motion or presence at the site; open/close sensors such as magnetic sensors for detection operation of openings such as doors, windows or hatches; a camera or other visual monitoring system; an active wave reflection or occlusion device such as a radar, sonar, ultrasound, or light based detection device; user operated devices such as tag readers, push buttons; user monitoring devices such as fall detectors, activity monitors, medical or physiological monitoring devices; and/or the like. However, the sensing devices 10a 10b are not limited to the above, and other types of sensing device 10a, 10b for sensing events at the site 20 could be used.

The action devices 15a, 15b, 15n are configured to take some form of action in response to the detection of the event by at least one of the sensing devices 10a, 10b. Typically, the action taken by the action devices 15a, 15b, 15n is an action performed at the site 20. Examples of action devices 15a, 15b, 15n include alert devices such as alarm sirens and/or alarm lights to notify a person of a detected intrusion or deterrent action devices such as light obscuring material emission devices such as foggers or smoke generating devices, chemical irritant deployment devices, audio and/or visual devices for causing physical discomfort (e.g. by providing stronger stimulus than the alerting devices), or the like. Examples of possible action devices 15a, 15b, 15n include access control devices, such as door locks, automatic or other powered doors, or other machine operable access control devices. Other examples of possible action devices 15 a, 15b, 15n include audio devices such as speakers or the like that could, for example, be configured to emit audible messages such as messages provided via a phone or data connection, pre-recorded or computer generated messages. Other examples of possible action devices 15a, 15b, 15n include operating lights in a room, operating sound systems, televisions, air conditioning, room or other space heating apparatus, and/or the like. The action device 15a, 15b, 15n could include a verification device, e.g. to verify the action determined to have been sensed by the sensing device 10a, 10b is correct, such as a camera or other form of additional sensing device. However, the above are exemplary and other types of action device 15a, 15b, 15n could be used that can take some form of additional action, such as a physical action, in response to the detection of the event. In general terms, the action device 15a, 15b, 15n may perform one or both of an output action as discussed herein or a verification action.

Although the sensing devices 10a, 10b and the one or more action devices 15a, 15b, 15n are shown as being different and separable devices, at least one of the sensing devices 10a, 10b and/or at least one of the one or more action devices 15a, 15b, 15n could have both sensing and action functionality, i.e. are operable both as a sensing device 10a, 10b and an action device 15. As examples, a device could have a PIR and a smoke generating device incorporated in the same unit and so could be operable as a sensing device 10a, 10b and an action device 15a, 15b, 15n. In this example, the device may be operable to detect an event using its PIR but a different device could perform an action responsive to the event detection, and/or the device could activate its smoke generating device responsive to an event detected by a different sensing device 10a, 10b even if the PIR of the device does not detect an event. Another example is a camera unit that can be operable as a sensing device 10a, 10b, and as an action device 15a, 15b, 15n, e.g. to verify an event detected by a different sensing device 10a, 10. The above are provided as examples, but other types of dual function sensing and action devices in which the sensing and action functionality are decoupled or independent could be used.

The networked system further comprises components a remote server 25 that is remote from the site and configured to communicate with one or more of the devices 10a, 10b, 15a, 15b, 15n at the site 20 via a wide area network 30, e.g. over the internet or via a POTS, DSL, optical fibre, cellular, or other long range data carrying network infrastructure. In the particular example shown in Figure 2, the remote server 25 is configured to communicate with the one or more action devices 15a, 15b, 15n via the wide area network 30. Beneficially, the networked system 5 does not comprise a control hub, such as a control panel, located at the site 20. Instead at least some or all of the functionality of the control hub in a traditional system is performed by the remote server 25.

However, in the networked system 5, at least the action devices 15a, 15b, 15n and optionally also the sensing devices 10a, 10b are configured to be in a power saving mode as a default, and are more particularly 'wirelessly wakeable devices', as discussed herein. For example, with reference to Figure 2, an example of the power saving mode may be a mode in which at least the communications interface 55, 85 of the appropriate wirelessly wakeable device has a receiver that alternates between active and inactive states while the at least part of the CPU processor 35, 63 remains in a sleep mode or off mode. In other words, in the power saving mode at least one or each of the components of the 'wirelessly wakeable device' that are not required for listening for the wake up signal are placed in the sleep or powered off mode. Each of the 'wirelessly wakeable devices' are configured to exit the power saving mode responsive to receipt of a wake up signal for the wirelessly wakeable device, which could be, in one example, a wake up signal for waking all sleep-devices (e.g. a broadcast signal), or in another example a wake up signal specifically addressed to at least the wirelessly wakeable device in question (e.g. using a unicast signal addressed to only that wirelessly wakeable device), or using a signal to a select specific plurality of the wirelessly wakeable devices (e.g. using a multicast signal).

For sensing devices 10a, 10b, when in the reduced power mode, the sensing devices 10a, 10b are still sufficiently operational to detect the event using the sensor 50 and, in response, are configured to exit the power saving mode. However, the one or more action devices 15a, 15b, 15n in the networked system 5 need not be the device that sensed the event. As such, given that the one or more action devices 15a, 15b, 15n are by default in the power saving mode, not having a local control hub gives rise to challenges in keeping power consumption acceptably low and in communicating with the one or more action devices 15a, 15b, 15n.

Figure 3 shows a schematic of an exemplary sensing device 10a, 10b. The sensing device 10a, 10b comprises sensing device processing resource 35 for processing commands and implementing logic. The processing resource 35 comprises at least one sleep component, for example as described herein. The sensing device processing resource 35 would typically comprise one or more processors but could comprise alternative processing functionality such as FPGAs, ASICs or the like. The sensing device 10a, 10b further comprises or is configured to access sensing device data storage 40a, 40b, 40c which comprises, for example, mass storage 40a such as one or more magnetic, optical or solid state data storage devices, ROM 40b and RAM 40c. The data storage 40a, 40b, 40c is accessible by the processing resource 35 via a sensing device bus 45 or other interconnect. The sensing device comprises the sensor 50 for sensing events that occur at the site 20. The sensor can be any of the types of sensor discussed above, such as a PIR motion or presence sensor or an open/close sensor, but is not limited thereto. The sensing device 10a, 10b also comprises a sensing device communication interface 55 comprising a communications module as described herein. The communication interface 55 implements a wireless communications channel with one or more senders or recipients of signals. In the context of the present embodiment, the sensing device communications interface 55 is configured to transmit and receive wireless signals structured in accordance with one or more predefined communications protocols. The sensing device processing resource 35, sensing device data storage 40a, 50b, 40c, sensor 50 and sensing device communication interface 55 are communicatively connected by the sensing device bus 45 or other interconnect. Although in other embodiments at least part of the communication interface 55 may be incorporated into the processing resource 35. The sensing device 10a, 10b is configured for fully wireless operation without wired power or data connection, and as such is provided with a sensing device power unit 60 that could comprise power storage, e.g. a battery or other electrochemical cell or a capacitor, or power generation such as a solar power generator, or the like.

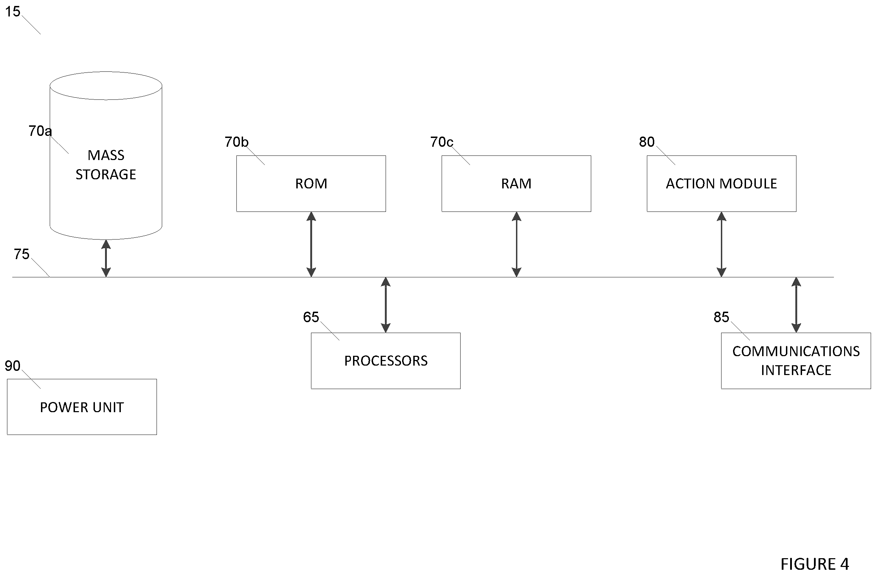

Figure 4 shows a schematic of an exemplary action device 15a, 15b, 15n. The action device 15a, 15b, 15n comprises action device processing resource 65 for processing commands and implementing logic. The processing resource 65 comprises at least one sleep component for example as described herein. The action device processing resource 65 can comprise one or more processors but could comprise alternative processing functionality such as FPGAs, ASICs or the like. The action device 15a, 15b, 15n further comprises or is configured to access action device data storage 70a, 70b, 70c which comprises, for example, mass storage 70a such as one or more magnetic, optical or solid state data storage devices, ROM 70b and RAM 70c. The action device data storage 70a, 70b, 70c is accessible by the processing resource 65 via an action device bus 70 or other interconnect. The action device 15a, 15b, 15n comprises an action system 80 for performing the action at the site 20. The action system 80 can be any of the types of action system discussed above, such as a fogger, smoke generator, siren, flashing light, or other deterrent device, speaker, camera or other verification device, or access control device, but is not limited thereto. The action device 15a, 15b, 15n also comprises an action device communication interface 85 comprising a communications module as described herein. The communication interface 85 implements a wireless communications channel with one or more senders or recipients of signals. In the context of the present embodiment, the action device communications interface 85 is configured to transmit and receive wireless signals structured in accordance with one or more communications protocols. The action device processing resource 65, sensing device data storage 70a, 70b, 70c, action system 80 and action device communication interface 85 are communicatively connected by the action device bus 75 or other interconnect. Although in other embodiments at least part of the communication interface 85 may be incorporated into the processing resource 65. The action device 15 is also configured for fully wireless operation without wired power or data connection, and as such is provided with an action device power unit 90 that could comprise power storage or power generation.

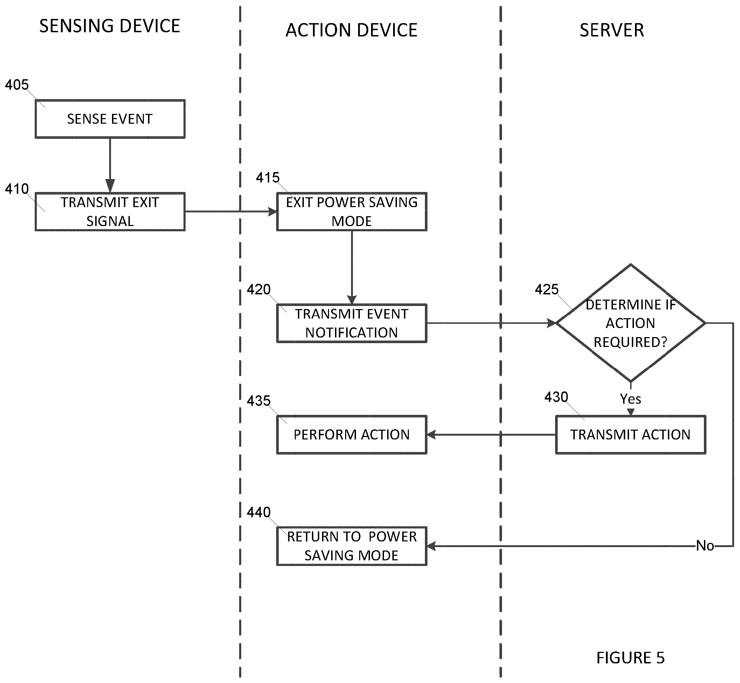

As can be seen from Figure 2, the sensing devices 10a, 10b are configured to wake the action device 15a, 15b, 15n, which is then configured to wirelessly communicate (e.g. via a cellular or Wi-Fi path) with the remote server 25 via the wide area network 30 in order to identify what action, if any, the action device 15 should take. An exemplary operation of the networked system 5 is illustrated in Figure 5.

In step 405, one or more of the sensing devices 10a, 10b senses an event at the site 20 via their respective sensors 50. In examples where the sensing devices 10a, 10b are PIR motion or presence detectors and the sensors 50 are PIR detectors, then the sensed event may be motion or presence of a living entity.

Responsive to sensing the event, the sensing device 10a, 10b transmits a wake up signal, step 410, that can be received by the one or more action devices 15a, 15b, 15n. The wake up signal may comprise a preamble for signalling to the one or more action devices 15a, 15b, 15n that a signal is present that has potential to be a wakeup signal for the device. The wakeup signal may comprise, after the preamble, data defining it as a valid signal for causing wakeup may comprise further data that to selectively address one or more (e.g. a subset) or all of the one or more action devices 15a, 15b, 15n and optionally to identify an action for them to perform. Thus, in examples, the wake up signals can be selectively addressed only to selected action devices 15a, 15b, 15n, i.e. to a subset or all of the action devices 15a, 15b, 15n, e.g. by unicasting or multicasting, or in other examples the wake up signals can be broadcasted and receivable by any action device 15a, 15b, 15n, which then determines whether it is required to perform an action. Thus, to account for both these scenarios, the concept of transmitting a signal for a given device to wake up or to switch to a high power mode, may be understood to mean that the signal may be unicasted, multicasted or broadcasted, so long as the signal configures at least that device to wake or switch to the higher power mode and perform a wakeup task thereafter. In some implementations, the further data may comprise an identity of the sensing device 10a, 10b, the nature of the event, data from the sensor 50 or information derived therefrom, or the like. Beneficially, the wake up signal is transmitted using a wireless communication protocol that requires lower power or energy to listen for than would be required to listen for the wake up signal via Wi-Fi or using cellular communications such as GSM, 3G, 4G, or the like. An example of a suitable communications protocol that could be used to transmit the wake up signal is Bluetooth Low Energy (BLE) wherein transmitting the wakeup signal comprises transmitting a BLE advertisement. In order to facilitate this, the communications interfaces 55, 85 of both the sensing devices 10a, 10b and the one or more action devices 15a, 15b, 15n are configured to wirelessly communicate via the low power communication protocol, e.g. to send or receive, as applicable, BLE advertisements. For example, the action device 15a, 15b, 15n may be in the power saving mode in which it is configured to periodically listen for a BLE advertisement and the sensing device 10a, 10b may be configured to transmit a BLE advertisement to trigger the action device 15a, 15b, 15n to operate a higher power consuming process than it would were the BLE advertisement not be transmitted. This may be for example be in accordance with the power saving methods described herein.

The wake up signal may comprise, by way of example, a wake on radio or wake on beacon signal. Although wake on radio or wake on beacon are two examples of mechanisms for exiting the action device 15 from the low power mode, other mechanisms can be used. Waking on a BLE advertisement operates on essentially the same principal as wake on radio, but during the listening period a wirelessly wakeable device listens in a plurality of different frequency ranges for a preamble. Like wake on radio, waking on a BLE advertisement does not require the device listening for the wakeup signal to maintain clock synchronicity with the device configured to transmit it, i.e. the communication of the BLE advertisement is asynchronous and therefore advantageous for similar reasons.

In any case, while listening for the wake up signal, the action device may optionally be configured to shut down some or all of the functionality of its processing resource 65 and/or other components but retain enough functionality of the processing resource 65 and the communications interface 85 to receive the wake up signal and exit from the low power mode in response.

Regardless of the mechanism for exiting the action device 15a, 15b, 15n from the power saving mode, upon receiving the wake up signal (or in some embodiments a wakeup signal specifically addressed to it), the action device 15a, 15b, 15n is configured at 415 to exit the power saving mode. **In** the absence of receiving a wakeup signal during the current listening period, the action device 15a, 15b, 15n remains in the power saving mode.

Responsive to receipt of a wake up signal addressed to it (and any associated information such as an identifier of the sensing device 10a 10b, the type of event detected, etc.), at 420 the action device 15a, 15b, 15n communicates directly with the remote server 25 via the wide area network 30 in order to ascertain whether the action device 15a, 15b, 15n has to perform a server-controlled action and, if so, what action it has to perform. Optionally the task of the action device 15a, 15b, 15n communicating with remote server 25 may be commanded (or not) in or subsequent to the wake up signal, thus allowing the sensing device 10a, 10b to wake up the action device 15a, 15b, 15n and perform alternative tasks in response to the wakeup. It will also be appreciated that a "wake up signal" as referred to herein may be any signal designed to at least cause a wakeup and cause performance of a wake up response task. For example, there need not be a field in its payload specifying that an action device 15a, 15b, 15n should wake up, provided there is a required task for the action device 15a, 15b, 15n specified which necessitates the action device 15a, 15b, 15n being awake to perform. In other words, a wake up command may be implied, rather than explicitly encoded.

The action device 15a, 15b, 15n is configured to wirelessly communicate over the wide area network 30 using a communications protocol that is different to the communications protocol used to receive the wake up signal directly from the sensing devices 10a, 10b. **In** particular, the action devices 15a, 15b, 15n are configured to receive the wake up signals directly from the sensing devices 10a, 10b using a communications protocol for which listening for a wakeup signal requires less power compared with listening for a wakeup signal using the communications protocol used by the action device 15a, 15b, 15n to wirelessly communicate with the server 25 via the wide area network (WAN) 30. In examples, the sensing devices 10a, 10b at the site 20 communicate directly with the action devices 15a, 15b, 15n at the site 20 using a local low energy communications protocol such as BLE (e.g. using BLE advertisements), whilst communications with the remote server 25 (from the action device 15a, 15b, 15n in this example) are indirectly with the remote server 25 via the wide area network 30 using a wireless communications protocol that requires higher energy than the protocol used for sensing device 10a, 10b to action device 15a, 15b, 15n communication. The wireless communication protocol used to communicate to the remote server 25 may be a long range communications protocol, such as or a cellular communications protocol such as GSM, 3G, 4G, 5G, or the like, or may be local protocol, for example Wi-Fi. In either case, communications to the remote server (such as from the action device 15a, 15b, 15n, in the example of Figures 2 and 5) comprise a WAN address for locating the remote server 25 on the WAN and/or an identifier, e.g. a domain name, for looking up that address, e.g. using a Domain Name Server (DNS). The sensing devices 10a, 10b beneficially communicate directly with the action device 15 without the communications being via an intermediate device such as a control hub, wireless router, cellular base station or the like. These arrangements contribute to a beneficial power arrangement in which the energy required by the action devices 15a, 15b, 15n to listen for the wake up signal is lower than that which would be required to listen to a wake up signal from the server 25 via a Wi-Fi hub or via a cellular network (e.g. a 3G, 4G or 5G network).

The remote server 25 is configured to implement logic at 425 to determine the appropriate action device 15a, 15b, 15n to perform the action and the action to be performed upon the action device 15a, 15b, 15n being woken. For example, the server 25 can comprise a computing system configured to implement logic that identifies a location of the sensing device 10a, 10b that sensed the event and the type of event that has been sensed, e.g. based on an identifier of the sensing device 10a, 10b and/or an event identifier provided to the action device 15a, 15b, 15n with or in the wake up signal and then from the action device 15a, 15b, 15n to the remote server 25.

The logic implemented by the remote server 25 can correlate the location of the sensing device or devices 10a, 10b that sensed an event or multiple linked events and the type of event or events, and optionally other factors, with an action to be performed (if any) and the action device or devices 15a, 15b, 15n to perform the action.

An example of the other factors that can be used to determine the action to be performed and the action device 15 to perform the action include an arming state of the networked system. The arming state is based on user input and stored or accessible by the remote server 25. For example, if the arming state is set to "armed" then one or more of: an action of sounding an alarm, outputting a deterrent measure and/or threat verification measures such as operating a camera or other threat verification device may be determined as actions responsive to detecting a motion or presence event by the sensing device 10a, 10b. However, if the arming state is set to "not armed" then an alternative action of "activate room lights" may be determined as an action responsive to detecting a motion or presence event by the sensing device 10a, 10b. The remote server 25 can usefully be configured to store or access the arming state set by the user, thereby providing a central and more current indication of the arming state. The sensing devices 10a, 10b, and the action device 15a, 15b, 15n on the other hand, do not know the current arming state set by the user, in some embodiments. If the arming state or other factor needs to be known by on-site devices (e.g. the sensing devices 10a, 10b, or the action devices 15a, 15b, 15n), then this places additional power demands on the on-site devices to synchronize this information with the current information at the server 25, so that the knowledge is up to date.

Once the server 25 determines which action to perform and by which action device 15a, 15b, 15n, the server 25 transmits a command over the wide area network 30 indicating the action device or action devices 15a, 15b, 15n to perform the action and the action to be performed at 430. Upon receiving the command from the server 25 and determining that it is the action device 15 to perform the action, the indicated action device 15 then performs the requested action at 435.

If the server 25 determines that no action is required, then at 440 the action device or devices 15a, 15b, 15n return to the power saving mode. In an example, if no action is required then the server 25 may simply return no response to the event notification transmitted by the action device 15a, 15b, 15n in step 420. In this case, the action device 15a, 15b, 15n may be configured to automatically revert to the power saving mode if no response is received from the server 20 within period of time. In another example, the server 20 is configured to actively transmit a no action required signal to the action device or devices 15a, 15b, 15n that are not required to perform an action in response to the event sensed in step 405 by the sensing devices 10a, 10b. Responsive to the no action required signal, the action device or devices 15a, 15b, 15n that are not required to perform an action return to the power saving mode.

The server 25 receives proof-of-alive indications from each of the site-installed devices (in the case of Figure 2), the action devices 15a, 15b, 15n and the sensing devices 10a, 10b), and keeps a dynamic record of which of the site-installed devices are available. As there is no local control hub, this functionality is not performed by a local control hub and is instead performed remotely by the server 25, so each of the site-installed devices periodically transmits a proof-of-alive signal to the server 25. The proof-of-alive signals may comprise specific signals periodically sent by the site-installed devices and/or may be any other signal sent by the site-installed devices such as event notification transmissions, as the mere act of transmitting a signal may be taken to be proof that the given site-installed device is alive and at least capable of transmitting. Optionally, the server 25 is configured to provide an alert or other form of user or operator notification if it does not receive a proof-of-alive signal from a site-installed device that is expects to be present and alive within a set period of time from the last proof-of-alive signal from that device. Thus, each site-installed device is configured to periodically transmit a proof-of-alive signal with a predefined frequency sufficient to ensure that, within the set period of time, the server 25 receives from the site-installed device at least one proof-of-alive signal, or more preferably at least two proof-of-alive signals so as to provide redundancy.

Other examples of control hub functionality that can be performed by the server 25 include communicating with the sensing devices 10a, 10b and actions devices 15a, 15b, 15n; and/or implementing a rules engine that defines certain rules for what to do in response to the sensed events, e.g. what action devices 15a, 15b, 15n to command to take action and in what scenarios.

It is noted, however, that although a given site-installed device will at times periodically transmit a proof-of-alive signal, it need not always do so. **In** other words, it may occur only sometimes. This is because when a site-device is active (e.g. because it is responding to a sensed event) the site device may end up transmitting a signal to the sever 25 before the due time for the next proof-of-alive signal. However, since each site-installed device will at least sometimes have prolonged periods of inactivity, it will at least sometimes (e.g. during a prolonged period of inactivity) transmit proof-of-alive signals according to the predefined frequency.

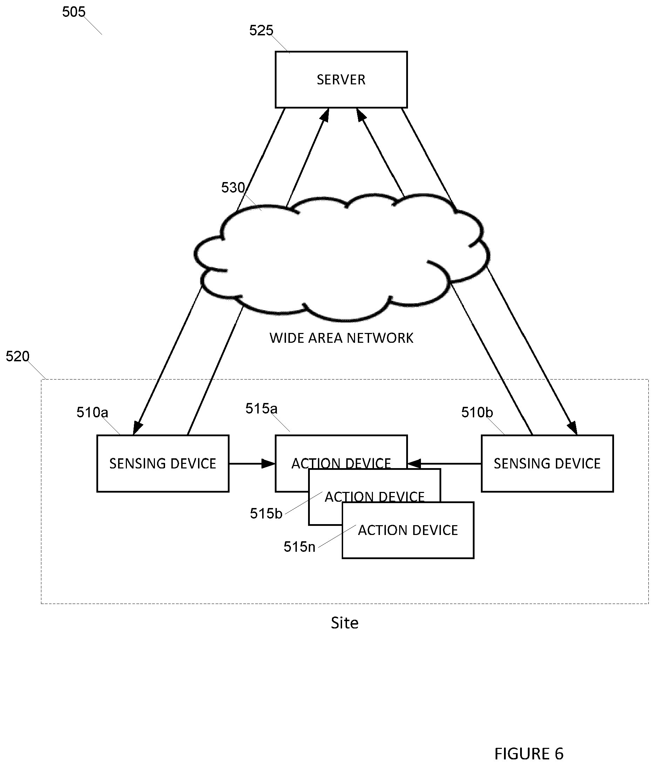

With the networked system 5 of Figure 2, the sensing devices 10a, 10b communicate directly with the action devices 15a, 15b, 15n, and the action devices 15a, 15b, 15n rather than the sensing devices 10a, 10b communicate with the remote server 25 via the wide area network 30. An alternative networked system 505 is shown in Figure 6. Components of the networked system 505 of Figure 6 that correspond to the components of the networked system 5 shown in Figure 2 are provided with corresponding reference numerals incremented by 500.

The networked system 505 shown in Figure 6 comprises at least one sensing device 510a, 510b and at least one action device 515a, 515b, 515n located at a site 520. The networked system 505 also comprises a remote server 525. The sensing devices 510a, 510b could comprise components as shown in Figure 3 and the action device or devices 515a, 515b, 515n could comprise components as shown in Figure 4, or similar, but are not limited to these examples.

The at least one sensing device 510a, 510b is configured to wirelessly communicate with the remote server 525 via a wide area network 530. The at least one sensing device 510a, 510b is also configured to wirelessly communicate directly with the at least one action device 515a, 515b, 515n. The at least one sensing device 510a, 510b is configured to use at least two different wireless communications protocols, a lower power communications protocol such as BLE (e.g. using BLE advertisements) for communicating with the action devices 515a, 515b, 515n and a different, higher power, communications protocol such as Wi-Fi or a cellular communications protocol to communicate with the remote server 525 indirectly via the wide area network 530. Furthermore, the sensing devices 510a, 510b are configured to wirelessly communicate directly with the at least one action device 515a, 515b, 515n without passing through any intervening infrastructure such as a control hub, router or cellular base station. In contrast, the sensing devices 510a, 515b are configured to wirelessly communicate indirectly with the remote server 525 via the wide area network 530 that comprises intervening infrastructure such as Wi-Fi routers and/or cellular base stations, and associated network components.

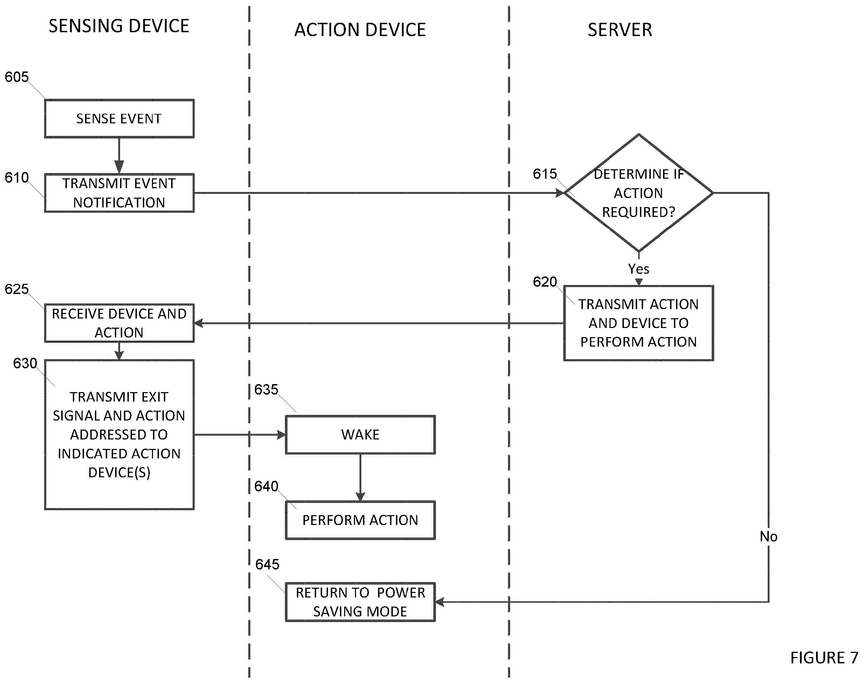

In example of communications between the sensing devices 510a, 510b, an action device of the at least one action devices 515a, 515b, 515n and the remote server 525 are illustrated in Figure 7.

In step 605, at least one or each of the sensing devices 510a, 510b sense an event or respective events at the site 520. Responsive to the sensing of an event, in step 610, the at least one or each of the sensing devices 510a, 510b that sense the event transmit an event notification to the remote server 525 via the wide area network 520. As an example, the event notification could comprise an identifier of the sensing device 510a, 510b and/or an event identifier. The transmission of the event notification is optionally before any transmission by the sensing device 510a, 510b to the action device 515a, 515b, 515n responsive to the sensing of the event.

In 615, responsive to receiving the/each event notification from the at least one or each of the sensing devices 510a, 510b via the wide area network, the remote server 525 determines if an action is required, if so, what action is required and what action device or devices 515a, 515b, 515n should perform the action, e.g. using logic such as that described above in relation to the embodiment of Figures 2 and 5. Where event notifications are received for multiple events, the server 525 may consider the multiple events in step 615. This permits the logic employed by the server 525 to determine the appropriate action and/or action device or devices 515a, 515b, 515n to select based on combinations of events rather than only individual events. The consideration by the server 525 may include the same consideration that is given by control hubs of the prior art, in relation corresponding events. As will be appreciated, the ability of the server 525 to consider single and multiple events also applies to the other embodiments described herein.

If the server 525 determines that no action is required, then at 645 the action device or devices 515a, 515b,..., 515n return to the power saving mode. In an example, if no action is required, then the server 525 could simply return no response to the event notification transmitted by the action device 515a, 515b,..., 515n in step 525. The action device 515a, 515b,..., 515n are configured to automatically revert to the power saving mode if no response is received from the server 520 within period of time. In another example, if no action is required, the server 520 is configured to actively transmit a no action required signal to the action device or devices 515a, 515b,..., 515n that are not required to perform an action in response to the event sensed in step 605 by the sensing devices 510a, 510b. In this case, responsive to the no action required signal, the action device or devices 515a, 515b,..., 515n that are not required to perform an action return to the power saving mode.

If an action is required then, in 620, the remote server 525 provides an authenticatable payload to the sensing device 510a, 510b that transmitted the event notification, or in the case of multiple event notifications, to at least one of the sensing devices 510a, 510b that transmitted the event notifications. The transmission of the authenticatable payload is via the wide area network 530 so includes a WAN address of the/each intended recipient sensing device 510a, 510b and/or an identifier for looking up the address. As will be described, the payload will eventually be delivered by the intended recipient sensing device to the action device 515a, 515b, 515n. The authenticatable payload is arranged so that it is authenticatable that the payload originated from the remote server 525, e.g. via public-private key encryption or other suitable cryptographic method, or by inclusion on a distributed ledger, or the like. In this way, any action the action device 515a, 515b, 515n is being instructed to perform by provision of the payload can be authenticated by the action device 515a, 515b, 515n as being from the remote server 525. This is particularly important in the embodiment of Figures 5 and 6 as the payload is relayed to the action device 515a, 515b, 515n by the sensing device 510a, 510b rather than being transmitted directly to it. The authenticatable payload means that the system 505 is less prone to outside interference or spoofing, which is particularly important in security systems. The payload comprises at least the action to be performed and an indication of the particular device 515a, 515b, 515n to perform the action.

In 625, the sensing device 510a, 510b that sensed the event and transmitted the event notification receives the authenticatable payload including the indication of the action device 515a, 515b, 515n to perform the action and the action to be performed from the remote server 525 via the wide area network 530. In 630, the sensing device 510a, 510b selectively wirelessly transmits a power saving mode exit signal (e.g. a wake up signal as described herein) and the authenticatable payload (either within or subsequent to the power saving mode exit signal) received from the remote server 525 directly to the particular action device or devices 515a, 515b,..., 515n indicated by the remote server 525 in the payload without being passed through any local control hub.

In the example shown in Figure 6, only the action device 515a is required to perform an action and so the power saving mode exit signal and the authenticatable payload is addressed only to the action device 515a and not to any of the other action devices 515b, ..., 515n. However, the logic implemented by the remote server 525 could determine that a different one of the action devices 515a, 515b, ..., 515n or a subset or all of the action devices 515a, 515b, ..., 515n should perform an action. In this case, the power saving mode exit signal and the authenticatable payload would be addressed only to whichever of the action devices 515a, 515b, ..., 515n the logic of the server 525 determines should perform an action based on the factors indicated above in relation to Figures 2 and 5, such as the location of the sensing devices 510a, 510b that sense the events, the nature of the sensed event, user set status of the system and/or the like.

The wireless transmission of the power saving mode exit signal and the authenticatable payload by the sensing device 510a, 510b is via a local wireless communications protocol such as via BLE (e.g. using BLE advertisements) that requires less power to listen for a wakeup signal than to listen for a wakeup signal using the communications protocol used by the sensing device 510a, 510b to wirelessly communicate with the server 525 via the wide area network (WAN) 530.

The wireless communication protocol used to communicate between the sensing device 510a, 510b and the remote server 25 in this example is a long range communications protocol, such as or a cellular communications protocol such as GSM, 3G, 4G, 5G, or the like, or may be local protocol, for example Wi-Fi. Communications to the remote server 525 (from the sensing device 510a, 510b in this example) comprise a WAN address for locating the remote server 525 on the WAN and/or an identifier, e.g. a domain name, for looking up that address, e.g. using a Domain Name Server (DNS). The sensing devices 510a, 510b beneficially communicate directly with the action devices 515a, 515b,..., 515n without the communications being via an intermediate device such as a control hub, wireless router, cellular base station or the like. These arrangements contribute to a beneficial power arrangement in which the energy required by the action devices 515a, 515b,..., 515n to listen for the wake up signal is lower than which would be required to listen to a wake up signal from the server 525 via a Wi-Fi hub of via a cellular network (e.g. a 3G, 4G or 5G network).

The action device 515 receives the power saving mode exit signal and the authenticatable payload from the sensing device 510a, 510b. Responsive to the receipt of the power saving mode exit signal, the action device 515 is configured to wake in 635 and responsive to the authenticatable payload (and it being authenticated that the authenticatable payload originated from the remote server 525 and that the particular action device 515 is the action device that should perform the action) in 640 the action device 515 performs the action indicated in the authenticatable payload. While in some embodiments the authenticatable payload may be a payload of the power saving mode exit signal, in other embodiments, a first message may be used to wake the action device and a second message may follow to provide the authenticatable payload. For example, the first message may be a BLE advertisement and the second message may be another BLE advertisement, or a different BLE message type, or a message of a different local protocol that the relevant sensing device 510a, 510b and action device 515a, 515b,..., 515n may switch into after the waking of the action device 515a, 515b,..., 515n.

The operation scheme indicated in Figures 6 and 7 is particularly beneficial in that it may optionally only wake up the action device or devices 515a, 515b,..., 515n required to perform the action and not all of the action devices 515a, 515b,..., 515n, thereby potentially reducing power consumption. In another embodiment, all action devices may be woken to read a payload of the power saving mode exit signal, but only a specified subset of the action devices is selected, whereby only the selected subset performs a task defined in the payload, whereas all other woken action devices return back to the power saving mode. The above embodiment also provides a secure system that is resistant to outside tampering.

In the example of Figures 2 and 5, only the one or more action devices 15a, 15b, ..., 15n communicate with the remote server 25, whilst in the example of Figures 5 and 7, only the sensing device or devices 510a, 510b that sense the event communicate with the remote server 525.

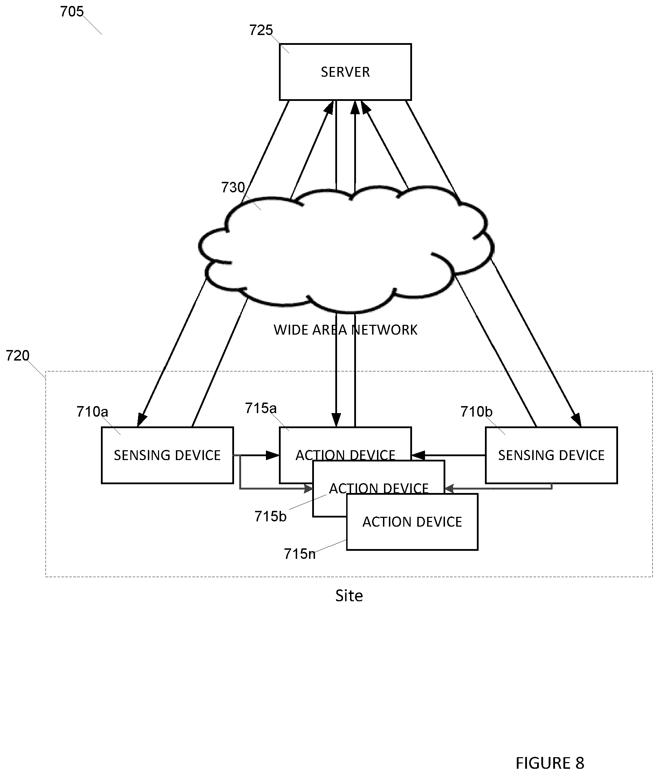

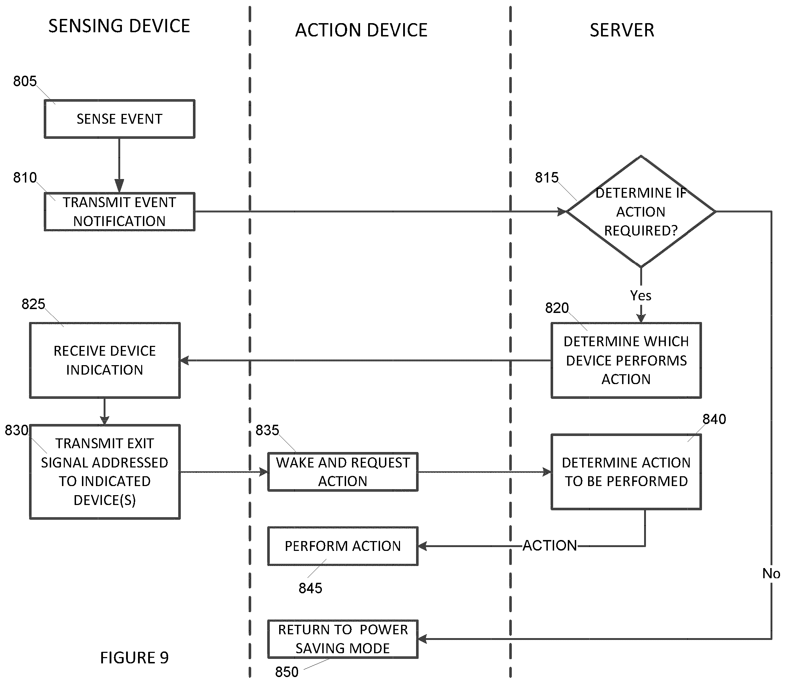

Figures 8 and 9 illustrate a networked system 705 that comprises one or more sensing devices 710a, 710b and one or more action devices 715a, 715b, ..., 715n at a site 720. Components of the networked system 705 that are equivalent to those of the networked system 5 of Figures 2 and 5 are indicated with the same reference numerals but incremented by 700. The networked system 705 also comprises a remote server 725. In this example both the sensing devices 710a, 715b and the one or more action devices 715a, 715b, ..., 715n can communicate with the remote server 725 via a wide area network 730, such as a cellular communications network or via the internet or other suitable wide area data network.

An exemplary operation of the networked system 705 is illustrated in Figure 9. At 805, one or more of the sensing devices 710a, 710b senses an event at the site 720. Responsive to sensing the event, the sensing device or devices 710a, 710b that sense the event then transmit an event notification to the remote server 725 via the wide area network 730. The transmission from the sensing device 710a, 710b and the remote server 725 uses a wireless communications protocol such as Wi-Fi or a cellular wireless communications protocol, such as GSM, 3G, 4G, 5G or the like.

The remote server 725 receives the event notification and, at 815, determines if an action is required. This may comprise implementing logic of the type described above in relation to Figures 2 and 5 and/or Figures 6 and 7.

If the server 725 determines that no action is required, then at 850 the action device or devices 715a, 715b,..., 715n returns to the power saving mode using one of the mechanisms described above in relation to Figures 5 or 7.

If an action is required, then the logic can also be used to determine which action device 715a, 715b, ..., 715n performs the action at 820, and optionally what action is to be performed. The indication of the action device 715a, 715b, ..., 715n to perform the action is then transmitted from the remote server 725 back to the sensing device 710a, 710b that sensed the event via the wide area network 730. In this example, the remote server 725 does not transmit the action to be performed at this stage. If an action is not required, then no further action is taken by the remote server 725 in response to the event notification, or a reply signal indicating that no action is to be taken is transmitted to the sensing device(s) 710a, 710b that transmitted the/an event notification.

In cases where an action is to be performed, then at 825, the indication of which action device 715a, 715b, ..., 715n is to perform the action is received by the sensing device or devices 710a, 710b that sensed the event and sent the event notification. The sensing device or devices 710a, 710b can then transmit a low power mode exit signal (e.g. a wake up signal as described herein) addressed to the action device or action devices 715a, 715b, ..., 715n indicated by the remote server 725 at 830.

The communications, comprising the low power mode exit signal, between the sensing device or devices 710a, 710b and the at least one action device 715a, 715b, ..., 715n use a local wireless communications protocol that requires less power to listen for a wakeup signal than to listen for a wakeup signal using the communications protocol used to wirelessly communicate between the sensing device or devices 710a, 710b and the at least one action device 715a, 715b, ..., 715n and the server 725 via the wide area network (WAN) 730. For example, the communications between the sensing device or devices 710a, 710b and the action device 715a, 715b, ..., 715n could use a communications protocol that uses less power to listen than Wi-Fi, or any cellular communications protocol such as GSM, 3G, 4G or 5G or the like. An example of a suitable protocol for communications between the sensing device or devices 710a, 710b and the action device 715a, 715b, ..., 715n is Bluetooth low energy (BLE), e.g. employing BLE advertisements.

The sensing device or devices 710a, 710b transmit the low power mode exit signal only to the action device or action devices 715a, 715b, ..., 715n indicated by the remote server 725 (e.g. by suitable addressing). In the example of Figure 8, only action devices 715a, 715b are required to perform actions so the low power mode exit signals are addressed only to action devices 715a, 715b and not to the action devices 715n not required to perform actions. However, any individual action device, a subset of the action devices or all of the action devices 715a, 715b, ..., 715n could be indicated by the remote server 725 depending on the results of the logic applied by the remote server 725 and described above in relation to the examples of Figures 5 and 7.

On receiving the low power mode exit signal, the action device 715a, 715b, ..., 715n is configured to exit the low power mode (e.g. as has elsewhere been described herein), in 835 and thereafter, to communicate with the remote server via the wide area network 730 in order to request an action to perform.

On receiving the request for action from the action device 715a, 715b, ..., 715n via the wide area network 730, the server is configured to implement the logic as described above to determine which action the action device is to perform at 840, if not determined at step 820. In any case in response to the server 725 receiving the action request, the determined action is transmitted by the remote server 725 via the wide area network 730 back to the requesting action device 715a, 715b, ..., 715n , which then performs the action at 845.

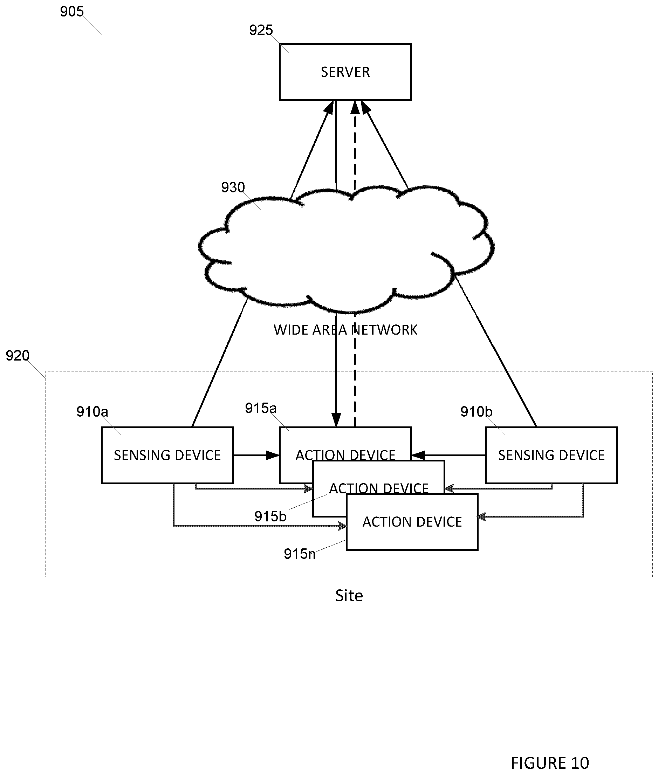

Figure 10 illustrates a networked system 905 that comprises one or more sensing devices 910a, 910b and one or more action devices 915a, 915b, ..., 915n at a site 920. Components of the networked system 705 that are equivalent to those of the networked system 5 of Figures 2 and 5 are indicated with the same reference numerals but incremented by 900. The networked system 905 also comprises a remote server 925. In this example both the sensing devices 910a, 915b and the one or more action devices 915a, 915b, ..., 915n can communicate with the remote server 925 via a wide area network 930, such as a cellular communications network or via the internet or other suitable wide area data network.

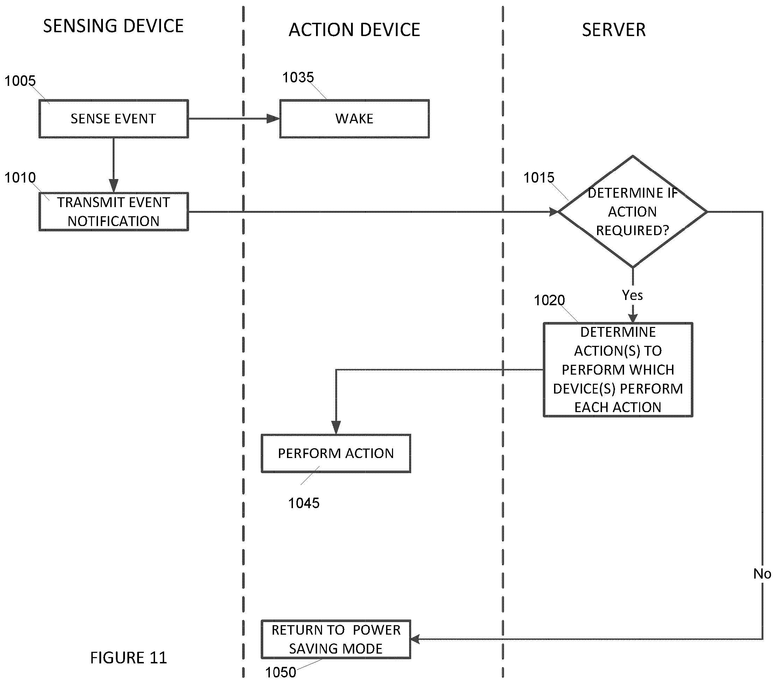

An exemplary operation of the networked system 905 is illustrated in Figure 11.

At 1005, one or more of the sensing devices 910a, 910b senses an event at the site 920.

Responsive to sensing the event, the sensing device or devices 910a, 910b that sense the event transmit a low power mode exit signal (e.g. a wake up signal as described herein) to trigger wakeup responses in each of the action devices 915a, 915b, ..., 915n, for example by broadcasting or multi-casting the low power mode exit signal.

The communications, comprising the low power mode exit signal, between the sensing device or devices 910a, 910b and the at least one action device 915a, 915b, ..., 915n use a local wireless communications protocol that requires less power to listen for a wakeup signal than to listen for a wakeup signal using the communications protocol used to wirelessly communicate between the sensing device or devices 910a, 910b and the at least one action device 915a, 915b, ..., 915n and the server 925 via the wide area network (WAN) 930. For example, the communications between the sensing device or devices 910a, 910b and the action device 915a, 915b, ..., 915n could use a communications protocol that uses less power to listen than Wi-Fi, or any cellular communications protocol such as GSM, 3G, 4G or 5G or the like. An example of a suitable protocol for communications between the sensing device or devices 910a, 910b and the action device 915a, 915b, ..., 915n is Bluetooth low energy (BLE), e.g. employing BLE advertisements.

On receiving the low power mode exit signal, each action device 915a, 915b, ..., 915n is configured to exit the low power mode (e.g. as has elsewhere been described herein), in 1035. Each action device 915a, 915b, ..., 915n is configured for communication with the remote server via the wide area network 930, for example the action device 915a, 915b, ..., 915n may initiate a communication to determine whether there is an action for it to perform, or the action device 915a, 915b, ..., 915n may listen for a communication initiated by the server 925 that may instruct an action to perform.

Responsive to sensing the event, the sensing device or devices 910a, 910b that sense the event also transmit an event notification to the remote server 925 via the wide area network 930. The transmission from the sensing device 910a, 910b and the remote server 925 uses a wireless communications protocol such as Wi-Fi or a cellular wireless communications protocol, such as GSM, 3G, 4G, 5G or the like.

The remote server 925 receives the event notification and, at 1015, determines if an action is required. This may comprise implementing logic of the type described above in relation to Figures 2 and 5 and/or Figures 6 and 7.

If the server 925 determines that no action is required, then at 1050 the action device or devices 915a, 915b,..., 915n returns to the power saving mode using one of the mechanisms described above in relation to Figures 5 or 7.

If an action is required, then the logic can also be used to determine which action device 915a, 915b, ..., 915n performs the action at 1020, and optionally what action is to be performed. The indication of the action device 915a, 915b, ..., 915n to perform the action may then be transmitted from the remote server 925 to a selection of the section devices 915a, 915b,..., 915n. Optionally, this may be achieved by transmitting a message to each device of the selection or, as shown in Figure 11, by transmitting a message that may be read by all of the devices of the selection (e.g. by multicasting). The remote server 925 may at this stage also transmit a definition of the action to be performed by the selected device(s). Where multiple devices are to perform actions, optionally different devices may be instructed to perform different actions. The relevant action device(s) 915a, 915b, ..., 915n then perform the action at step 1045.

On the other hand, if an action is not required any of the action devices 915a, 915b, ..., 915n, then in some embodiments no further action is taken by the remote server 925 in response to the event notification, and in other embodiments a reply signal indicating that no action is to be taken is transmitted to the relevant action devices 915a, 915b, ..., 915n.

Optionally, in embodiments where communication between the server 925 and the action device(s) 915a, 915b, ..., 915n are initiated by the server 925, the server 925 may, after receiving the notification from the sensing device 910a, 910b, assume that the action device(s) 915a, 915b, ..., 915n are available for communication by assuming that the action device(s) 915a, 915b, ..., 915n were woken by the sensing device 910a, 910b. Optionally the sensing device 910a, 910b to the server 925 may confirm that the action device(s) 915a, 915b, ..., 915n received the wireless signal from the sensing device 910a, 910b (e.g. based on acknowledgments from the action devices 915a, 915b, ..., 915n) and indicate this confirmation to the server 925.

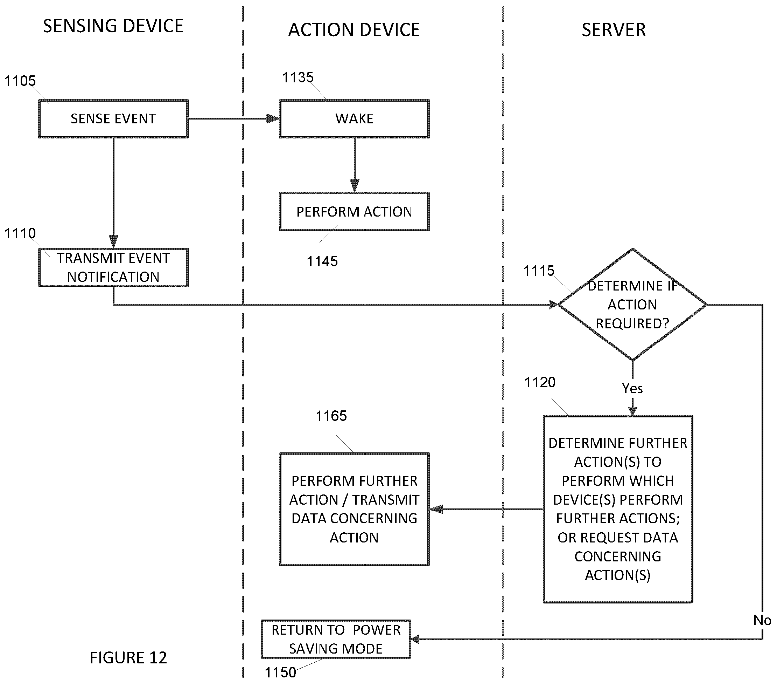

In some embodiments, for a faster response time to perform any potentially needed actions, one or more of the actions devices may be configured to perform at least some predetermined actions (e.g. an image capturing action) immediately upon waking, even if without receiving a command from the remote computing system to perform the action. Faster response times may for example be important for security applications where it may be beneficial to capture images within the site with minimal delay from the time of detecting motion. However, some actions may only be necessary when the system, at least as it relates to a given action device, is armed (for example, when no authorized people are expected to be in the site). In some embodiments the sensing devices and/or the action devices are unaware of the current arming state. In such cases it may be beneficial for the action devices not to perform any actions that may not be needed for unarmed states (e.g. performing a deterrent action or a threat verification action), and instead wait for a command from the remote computing station (e.g. server 25, 525, 725, 925) which does know the current arming state. On the other hand, if the current arming state is known by the sensing device that detect an event and/or by the action device that may be needed to respond to a detected event (i.e. the sensing device of action device is "arm-aware"), then the action device, and if the system is armed at least in relation to the relevant action device (i.e. if the system is armed in association with the relevant action device), then the relevant action device may beneficially automatically perform certain actions upon being woken even without receiving a command to do so from the remote computing system. Such actions may for example include threat verification actions or at least preparing for performing the threat verification actions; and/or threat deterrent actions or at least preparing for performing the threat deterrent actions. Where the action device automatically performs a threat verification action, the action device may optionally only transmit data concerning the threat verification action (e.g. data defining an image(s) captured by the action device) to the remote computing system upon being requested to do so by the remote computing system. In this manner if it turns out that the images are not required by the remote computing system, they may be discarded, instead of being trasnmitted, by the action device. An example of such an implementation is illustrated in Figure 12 which, like the example of Figure 11, is consistent with the embodiment of Figure 10.

An exemplary operation of the networked system 905 is illustrated in Figure 11. In this example steps 1105, 1135 and 1110 may be the same as steps 1005, 1035 and 1010 of Figure 10. However in the example of Figure 11, upon waking at step 1135, the action device immediately performs an action at step 1145. In some embodiments the performance of the action at step 1145 is conditional upon the action device 915a, 915b, ..., 915n knowing its arming state. Action device 915a, 915b, ..., 915n may know the arming state based on a recording of its arming state in a memory that is integrated into the action device 915a, 915b, ..., 915n. In other embodiments, if the sensing device 910a, 910b that transmitted the wireless signal to trigger wakeup responses in the action device 915a, 915b, ..., 915n had known the arming state based on a memory integrated into the sensing device 910a, 910b, then the arming state may optionally be included in the wireless signal.

Having been woken, each action device 915a, 915b, ..., 915n is also then configured for communication with the remote server via the wide area network 930. For example, the action device 915a, 915b, ..., 915n may initiate a communication to determine whether there is an additional action for it to perform, or the action device 915a, 915b, ..., 915n may listen for a communication initiated by the server 925 that may instruct an additional action to perform. In addition to or an alternative to being instructed to perform an additional action the action device 915a, 915b, ..., 915n may be instructed by the remote server 925 to transmit to the remote server 925 data concerning the action (e.g. image or audio data captured by the action).

As in the case of Figure 11, in the example of Figure 12, responsive to sensing the event, the sensing device or devices 910a, 910b that sense the event also transmit an event notification to the remote server 925 via the wide area network 930. The transmission from the sensing device 910a, 910b and the remote server 925 uses a wireless communications protocol such as Wi-Fi or a cellular wireless communications protocol, such as GSM, 3G, 4G, 5G or the like.

The remote server 925 receives the event notification and, at 1115, determines if an action or additional action is required, or if data is required from the action device in relation to an action (herein "action data") it has performed or will be instructed to perform. This may comprise implementing logic of the type described above in relation to Figures 2 and 5 and/or Figures 6 and 7.

If action data or an additional action is required, then the logic can also be used to determine what the additional action is and which action device 915a, 915b, ..., 915n performs the additional action and/or can be used to determine which action device 915a, 915b, ..., 915n is to transmit action data at 1120. The indication of the action device 915a, 915b, ..., 915n to perform the action may then be transmitted from the remote server 925 to a selection of the section devices 915a, 915b,..., 915n. Optionally, this may be achieved by transmitting a message to each device of the selection or, as shown in Figure 12, by transmitting a message that may be read by all of the devices of the selection (e.g. by multicasting). The remote server 925 may at this stage also transmit a definition of the action to be performed by the selected device(s). Where multiple devices are to perform actions, optionally different devices may be instructed to perform different actions.

Upon receiving any commands to perform actions, or additional actions or to transmit data, at step 1165, the action device 915a, 915b,..., 915n then enacts the command.

On the other hand, if an action or action data is not required any of the action devices 915a, 915b, ..., 915n, then in some embodiments no further action is taken by the remote server 925 in response to the event notification, and in other embodiments a reply signal indicating that no action is to be taken (or that no action data is required) is transmitted to the relevant action devices 915a, 915b, ..., 915n.

Optionally, in embodiments where communication between the server 925 and the action device(s) 915a, 915b, ..., 915n are initiated by the server 925, the server 925 may, after receiving the notification from the sensing device 910a, 910b, assume that the action device(s) 915a, 915b, ..., 915n are available for communication by assuming that the action device(s) 915a, 915b, ..., 915n were woken by the sensing device 910a, 910b. Optionally the sensing device 910a, 910b to the server 925 may confirm that the action device(s) 915a, 915b, ..., 915n received the wireless signal from the sensing device 910a, 910b (e.g. based on acknowledgments from the action devices 915a, 915b, ..., 915n) and indicate this confirmation to the server 925.

In the various examples illustrated herein the sensing devices may wake multiple action devices, with each sensing device having the ability cause the same action devices to perform wakeup responses. However, in these or other embodiments different sensing devices may alternatively be preconfigured only trigger a certain selection of action devices to perform wakeup responses. Whether preconfigured or not, such a selection of action devices to perform wakeup responses may differ (even if overlapping) for different sensing devices. For example, sensing devices relating to security monitoring may be configured to trigger wakeup responses only in action devices relating to security whereas sensing devices relating only to home automation (e.g. lighting control or appliance activation) may trigger wakeup responses only in action devices relating to home automation. Further a given sensing device may optionally be configured for commanding a subset or all security action devices to perform wakeup responses and also for commanding a subset or all of non-security action devices to each perform a wakeup response.

In the examples described above, at least the action device(s) of the system 5, 505, 705, 905 may be configured to periodically transmit a proof-of-alive signal addressed to a remote computing system 25, 525, 725, 925 on a wide area network (WAN), or in some implementations each of the plurality of devices (e.g. the sensing device(s) and the action device(s)) of the system 5, 505, 705, 905 may be configured to periodically send a proof-of-alive signal to the remote computing system on a wide area network, WAN. The proof of alive signals are particularly beneficial to security and/or safety applications, where it is beneficial for the server 25, 525, 725, 925 to know that all sensing devices that are relied on (e.g. for monitoring purposes) are operational and/or that all action devices that could be needed to provide a security or safety response (e.g. in response to any events detected by a sensing device) are operational. The proof of alive signal may therefore include information to support the server in supervising the health of the respective device. For example, such information may include a report which may include an indication of battery level, e.g an amount of remaining battery life or a low-battery indication etc. In some embodiments the indication of the battery level may be always included or in embodiments only included in circumstances where the indicated battery remaining battery life has become below a threshold.

In some embodiments, the proof-of-alive signal may be transmitted with a regularity sufficient to additionally function as a keep-alive for a communications link, e,g, an MQTT link in some embodiments. However, in other embodiments, each of one or more of the plurality of devices in the site (or optionally at least the action devices or all of the plraulity of devices) may be configured so that the proof-of-alive signals from that device are transmitted at a regularity that is not limited to keep alive a link between the that device and the remote computing system 25, 525, 725, 925. In other words, the on-site device may be configured not to transmit keep-alives for maintaining a communications link to the remote computing system 25, 525, 725, 925, and may thereby save power by reducing the number of required transmissions by the device, even though it could result (if the link dies) in a need to establish a new communications link handshake with the remote computing system 25, 525, 725, 925 when the device next has a need to communicate with the remote computing system 25, 525, 725, 925. Establishing a new communications link may comprise, for example, one or both of a handshake procedure or an exchange of information for establishing secure communication (e.g. an exchange of certificates and/or cryptographic keys).

The wireless communication protocol used to communicate to transmit the proof-of-alive signal may be a long-range communications protocol, such as or a cellular communications protocol such as GSM, 3G, 4G, 5G, or the like, or may be local protocol, for example Wi-Fi. However, advantageously the wireless communication protocol used to by each of the action devices (or in some embodiments at least those that are used for security purposes), to transmit messages to the remote server 25, 525, 725, 925 (for example when transmitting the proof-of-alive signal) may be a cellular communications protocol, rather than a short-range protocol to a local router or local gateway. Thus, the security function may be provided without a site-installed hub. In other embodiments a non-cellular long-range protocol may be employed instead. Such a cellular or other long-range protocol same also be employed by each of the sensing devices of the system 5, 505, 705, 905.

In other embodiments, however, the system 5, 505, 705, 905 may additionally or alternatively include sensing devices and/or action devices like those described herein but which do not transmit proof-of-alive signals to the remote computing system 25, 525, 725, 925. This may be the case for example for any home automation devices in the system that serve neither security nor safety purposes.

In any case, using a cellular protocol, instead of Wi-Fi, may provide an additional benefit of improved reliability for communicating to the remote computing system via the WAN (using signals comprising the WAN address of the remote computing system and/or an identifier for determining the WAN address).

Although various examples of networked systems 5, 505, 705, 905 are described above, these are only exemplary and variations to the above are possible.

For example, although examples given above use a PIR sensors 50, it will be appreciated that other sensors may be used. Examples of alternative triggering sensors that could be used include active radiation emitter and detector arrangements such as but not limited to active visible or infra-red light emitter and receiver arrangements, ultrasonic presence or motion sensors, SONAR, RADAR, LIDAR, magnetic door/window sensors, amongst other possibilities. The sensors may be passive, i.e. simply receiving radiation that is emitted by the subject or present from background. However, in other embodiments, the sensors may be active, i.e. actively emitting a signal that is subsequently detected.

In addition, although a processing resource 35, 65 implemented by a processor is described above, other processing arrangements are possible. Furthermore, although references are made herein to processor, the processor could comprise, or at least some or all of the functionality ascribed to the processor may be performed by, or the processor could be replaced by, other processing devices. Examples of other processing devices include but are not limited to at least one of: one or more digital signal processors (DSPs), one or more field programmable gate arrays (FPGAs), one or more integrated FPGA/processor systems, one or more application specific integrated circuits (ASICS), an adaptive compute acceleration platform (ACAP), one or more system on chip (SoC) devices, one or more maths co-processors, one or more AI accelerators such as a tensor processing unit (TPU), one or more graphics processing units (GPUs) and the like.

The term "computer" as used herein may be any electronic processing device or system, for example as described herein.

As such, the specific examples are provided herein to aid the understanding of the reader and the scope of the present disclosure is not limited by the specific examples described herein.

As used herein, unless context demands otherwise, the expression "one or more of x and y" or "at least one of x and y", should be interpreted to cover: (i) at least one x, (ii) at least one y, (iii) at least one x and at least one y. That is, there may be, but need not be, both element x and element y. The same applies to any equivalent expressions referring to more than two elements, e.g, the expression "at least one of x, y, and z". The same interpretation should likewise be applied to the expressions "x, y, and/or z" and "at least x, y, and/or z".

As used herein, except where the context requires otherwise, the terms "comprises", "includes", "has", and grammatical variants of these terms, are not intended to be exhaustive. They are intended to allow for the possibility of further additives, components, integers or steps. In addition, any priority document(s) of this application is/are hereby incorporated herein by reference in its/their entirety.

### CLAUSES:

The following are clauses that form part of the description, each clause representing a respective aspect of the present disclosure.
1. A system comprising a plurality of devices configured for use at a site, the plurality of devices comprising:
   one or more sensing devices; and
   one or more other devices for performing an action commanded by a remote computing system;
   wherein
   each of the plurality of devices is configured to periodically send a proof-of-alive signal to the remote computing system on a wide area network, WAN, the proof of alive signal comprising a WAN address of the remote computing system and/or an identifier for determining the WAN address;
   each of the one or more sensing devices comprises at least one sensor for sensing an event and a communications system for communicating a wireless signal for at least one of the one or more other devices of the plurality of devices at the site to perform a wakeup response comprising exiting from a low power mode, wherein each device of the one or more other devices is configured to exit from the low power mode responsive to receiving at least part of a wireless signal for the device to perform the wakeup response from a device of said sensing devices.
2. The system of clause 1, wherein all of the one or more sensing devices can signal the one or more other devices to exit from the low power mode.
3. The system of any proceeding clause, wherein:
   the communication system is configured to communicate the wireless signal using a communications protocol that requires lower power or energy to listen for than the power or energy required to listen for at least one or each of: a GSM, 3G, 4G, 5G, other cellular communication protocol or Wi-Fi wake-up signal or for a lowest power or energy consuming one thereof.
4. The system of any preceding clause, wherein a communications protocol with which the wireless signal is communicated to the one or more other devices comprises a Bluetooth Low Energy (BLE) advertisement.
5. The system of any preceding clause, wherein a communication protocol used by the one or more or each of the plurality of sensing devices to communicate with the remote computing system consists of one of: GSM, 3G, 4G, 5G, another cellular communication protocol or Wi-Fi.
6. The system of any preceding clause, wherein the wireless signal for the one or more other devices of the plurality of devices to perform a wakeup response is transmitted by an asynchronous communication.
7. The system of any preceding clause, wherein the wireless signal for the one or more other devices of the plurality of devices to perform a wakeup response comprises a Bluetooth Low Energy (BLE) advertisement or a signal for performing a wake-on-radio response at the one or more other devices.
8. The system of any preceding clause, wherein:
   one or more or each of the one or more sensing devices are configured to, before communicating the wireless signal for the one or more other devices of the plurality of devices at the site, transmit an event notification to the remote computing system responsive to the sensing of the event, the event notification being transmitted with one or both of: a WAN address for reaching the remote computing system or an identifier for looking up the WAN address.
9. The system of any of clauses 1 to 7, wherein one or more or each of the one or more sensing devices, responsive to sensing an event:
   (i) communicates the wireless signal; and
   (ii) transmits an event notification to the remote computing system, the event notification being transmitted with one or both of: a WAN address for reaching the remote computing system or an identifier for looking up the WAN address.
10. The system of any preceding clause, wherein each of a plurality of the one of more other devices is configured to prepare for a threat verification action responsive to receiving a wireless signal from at least one of the sensing devices for said other device to perform a wakeup response.
11. The system of clause 10, wherein preparing for the threat verification action comprises calibrating an image capturing system to ambient light conditions.
12. The system of any preceding clauses, wherein each of a plurality of the one of more other devices are configured to perform a threat verification action responsive to receiving a wireless signal from at least one of the sensing devices for said other device to perform a wakeup response.
13. The system of any of any preceding clause, each of a plurality of the one of more other devices are configured to perform an image capturing action responsive to receiving a wireless signal from at least one of the sensing devices for said other device to perform a wakeup response.
14. The system of any preceding clause, wherein the one or more of the other devices comprises at least one output-generating device for performing at least one output action.
15. The system of any clause 14, wherein the at least one output action comprises at least one deterrent action.
16. The system of any clause 14, wherein the at least one deterrent action comprises any or more: generating a siren, or outputting light-obscuring material.
17. The system of any clauses 14 to 16, wherein responsive to receiving a wireless signal to perform a wakeup response the at least one output-generating device from any of the sensing devices, the at least one output-generating device is configured to perform at least one output task conditional upon thereafter receiving a command from the remote computing system to perform the task.
18. The system according to clause 17, wherein the command from the remote computing system to perform the action comprises a WAN address of the at least one of the output-generating device and/or an identifier for determining the WAN address.
19. The system according to any preceding clause wherein at least one of one or more sensing devices is an arm-aware device having a record of an associated arming-status.
20. The system according to any preceding clause wherein at least one of one or more other devices is an arm-aware device having a record of an associated arming-status, wherein the arm-aware device is configured to, upon receiving a wireless signal to perform a wakeup response from at least one of the sensing devices, perform a threat an action or not perform an action, upon waking, depending on the arming status.
21. The system according to any preceding clause wherein at least one of one or more other devices is an arm-aware device having a record of an associated arming-status, wherein the arm-aware device is configured to determine, depending on the arming status and without communicating with the remote computing system, whether an action performable by the arm-aware device is to be performed by the arm-aware device.
22. The system according to any preceding clause wherein the one or more sensing devices have no facility to receive mains power.
23. The system according to any preceding clause wherein the one or more other devices have no facility to receive mains power.
24. The system of any preceding clause, wherein:
   the one or more or each of the plurality of sensing devices are configured to communicate with the remote computing system using a different communications protocol to a communications protocol used to communicate the wireless signal to the one or more other devices, and:
   the communications protocol used by the one or more or each of the plurality of sensing devices to communicate the wireless signal to the one or more other devices requires lower power or energy to listen for the wireless signal than the power or energy required to listen for the communication to the remote computing system using the different protocol.
25. The system of any preceding clause, wherein each device of the one or more other devices is configured to:
   responsive to receiving the wireless signal for the device to perform a wakeup response, wirelessly transmit an event notification to the remote computing system, the event notification comprising a WAN address of the remote computing system and/or an identifier for determining the WAN address; and
   subsequently wirelessly receive from the remote computing system an indication of the action to be performed by the device in response to the sensing of the event by the one or more sensing devices.
26. The system of any preceding clause, wherein the at least one sensor comprises at least one of: a motion or presence sensor and/or a door or window opening sensor.
27. The system any preceding clause wherein the proof of alive signal comprises a parameter indicating a current battery level.
28. The system of any preceding clause, wherein the one or more sensing devices is a plurality of sensing devices, wherein a device of said one or more other devices is wake-able by communication of the wireless signal by any one of the plurality of sensing devices.
29. The system of any preceding clause, wherein the one or more other devices is a plurality of other devices, wherein each one of the one or more other devices is wake-able by communication of the wireless signal by any one of the plurality of sensing devices.
30. The system of any preceding clause, wherein the wireless signal is configured to trigger a plurality of the one or more other devices to perform wakeup responses.
31. The system of any preceding clause, wherein the wireless signal is configured to trigger all of the one or more other devices to perform wakeup responses.
32. The system of any preceding clause, wherein the system further comprises the remote computing system, the remote computing system being located remotely from the site.
33. The system of clause 32, wherein the remote computing system is configured to, responsive to receiving the event notification from the one or more or each sensing device, determine at least one action parameter, the at least one action parameter comprising at least one or each of:
   an instruction to wake at least one of the one or more other devices;
      an indication of which at least one of the one or more other devices is to perform an action; and/or
   an indication of the action at least one of the one or more other devices is to perform;
   the remote computing system being further configured to communicate the at least one action parameter to at least one of the plurality of sensing devices from which the event notification was received and/or the one or more other devices.
34. The system of clause 33, wherein the system includes a plurality of the other devices and at least one or both of:
   the instruction to wake the at least one other device is an instruction to wake a subset of one or more but less than all of the plurality of other devices; and/or
   the indication of which at least one of the one of more other devices is to perform an action is an indication of a subset of one or more but less than all of the plurality of other devices.
35. The system of clause 33 or 34, wherein:
   the at least one action parameter comprises at least the indication of which of the one or more other devices is to perform the action, and the remote computing system is configured to communicate the at least one action parameter to the one or more or each sensing device;
   responsive to receiving the at least one action parameter, the one or more or each sensing device is configured to communicate the wireless signal for the at least one of the one or more other devices of the plurality of devices indicated in the at least one action parameter to perform a wakeup response.
36. The system of clause 35, wherein each of the one or more other devices is configured to:
   responsive to receiving the wireless signal for the device, to perform a wakeup response, transmit a signal to the remote computing system via a wide area network to enable the remote computing system to instruct in reply an action to perform, and
   responsive to wirelessly receiving the action to perform from the remote computing system via the WAN, perform the action.
37. The system of clause 33 or any clause dependent thereon, wherein:
   the remote computing system is configured to communicate the at least one action parameter to the one or more or each sensing device; and
   at least one or each of the one or more sensing devices is configured to, responsive to receiving the at least one action parameter, communicate to the at least one of the one or more other devices the wireless signal to perform a wakeup response and, in and/or following the wireless signal, the at least one action parameter.
38. The system of clause 37, wherein the at least one action parameter comprises at least the indication of which at least one of the one or more other devices is to perform the action and the indication of the action to be performed, and
   the communication of the at least one action parameter comprises communicating the indication of the action to be performed to the at least one of the one or more other devices of the plurality of devices indicated in the at least one action parameter.
39. The system of any of clauses 32 to 38, wherein the remote computing system is configured to, responsive to receiving the event notification, transmit at least one command message commanding transmission, by at least one of the one or more other devices, of data defining one or more images.
40. The system of any of clauses 32 or 39, wherein the remote computing system is configured to, responsive to receiving the event notification, transmit at least one command message, commanding performance of a threat verification action or image capturing action, by at least one of the one or more other devices.
41. The system of any of clauses 32 to 40, wherein the remote computing is configured to select one of more of the other devices, based on one of more event notifications, wherein said at least one command message defines a selection amongst the one or more other devices defining such that only said selection of the other devices is configured to act on the at least one command message.
42. The system of any of clauses 32 to 41, wherein the remote computing is configured to include in the at least one command message a WAN address of at least one of the one or more other devices and/or an identifier for determining the WAN address.
43. The system of any of clause 32 to 42, wherein the remote computing system is configured to, responsive to receiving the communication from the one or more or each sensing device, transmit an authenticatable payload to the one or more or each sensing device, the payload being authenticatable as being from the remote computing system, and the one or more or each sensing device is configured to communicate the authenticatable payload that is authenticatable as being from the remote computing device to at least one of the one or more other devices.
44. The system of any of clauses 32 to 43, wherein the remote computing system is configured to determine a status of the system set by a user and to determine the action the at least one of the one or more other devices is to perform based at least in part on the status of the system.
45. The system of clause 44, wherein the at least one of the one or more other devices are configured to authenticate that the authenticatable payload came from the remote computing system.
46. The system of clause 44, wherein the at least one of the one or more other devices are configured to authenticate that the authenticatable payload came from the remote computing system by authenticating a signature associated with the payload.
47. The system of any of clauses 44 to 46, wherein at least one of the action parameters comprises the indication of the action the at least one other device is to perform and is included in the authenticatable payload.
48. The system of any preceding clause, wherein, in addition to communicating with the one or more sensing devices and the one or more other devices over the WAN, the remote computing system implements a rules engine that defines rules for what to do in response to sensed events, the rules specifying at least which of the one or more other devices to command to take action and in what scenarios.
49. The system of any preceding clause, wherein the remoting computing system is configured to provide an alert or other form of user or operator notification if a timing condition in relation to the remote computing system receiving proof-of-alive signals from a device configured to periodically send proof-of-alive signals on the WAN is not met, wherein the proof of alive signals comprise a WAN address of the remote computing system and/or an identifier for determining the WAN address.
50. The system of clause 49, wherein providing the alert or other form of user or operator notification comprises transmitting message to a further device via the WAN.
60. The system any preceding clause wherein the proof of alive signal comprises information to support the remote computing system in supervising a health of the respective device.
61, A sensing device for operating as a device of a plurality of devices at a site, the sensing device comprising:
   at least one sensor for sensing an event;
   a communications system;
      wherein, responsive to sensing the event, the sensing device is configured to:
      communicate, using the communications system, an event notification for a remote computing device, the communication comprising transmission from the sensing device of (i) a wide area network (WAN) address for locating the remote computing device, and/or (ii) an identifier for looking up said address;
      receive a response from the remote computing system after the event notification has been communicated; and
   based on the response from the remote computing system, communicate, using the communications system, a signal for at least one other device of the plurality of devices at the site to perform a wakeup response comprising exiting from a low power mode, wherein:
      the response from the remote computing system comprises a authenticatable payload that is authenticatable as being from the remote computing system; and
      the sensing device is configured to communicate the authenticatable payload that is authenticatable as being from the remote computing system to the at least one other device.
62. The sensing device of clause 61, wherein:
   responsive to the response from the remote computing system comprising an instruction to wake up the at least one other device, the sensing device is configured to communicate, using the communications system, the signal for at least one other device of the plurality of devices at the site to perform a wakeup response.
63. The sensing device of any of clauses 61 to 62, wherein the authenticatable payload comprises an indication of the action the other device is to perform.
64. The sensing device of any of clauses 61 to 63, wherein the communications system is configured to communicate the signal directly to the at least one other device without being relayed by an intermediate apparatus.
65. A sensing device for operating as a device of a plurality of devices at a site, the sensing device comprising:
   at least one sensor for sensing an event;
   a communications system;
      wherein, responsive to sensing the event, the sensing device is configured to:
      communicate, using the communications system, an event notification for a remote computing device, the communication comprising transmission from the sensing device of (i) a wide area network (WAN) address for locating the remote computing device, and/or (ii) an identifier for looking up said address;
   wherein one or more or each of the one or more sensing devices, responsive to sensing an event:
      (iii) communicates a wireless signal for at least one other device of the plurality of devices at the site to perform a wakeup response comprising exiting from a low power mode; and
      (iv) transmits an event notification to the remote computing system, the event notification being transmitted with one or both of: a WAN address for reaching the remote computing system or an identifier for looking up the WAN address.
66. The sensing device of any of clauses 61 to 65, wherein:
   the communication system is configured to communicate the signal using a communications protocol that requires lower power or energy to listen than the power or energy required to listen for at least one or each of: a GSM, 3G, 4G, 5G, other cellular communication protocol or Wi-Fi wake-up signal or for a lowest power or energy consuming one thereof.
67. The sensing device of any of clauses 61 to 66, wherein the sensing device is configured to communicate with the remote computing system using a different communications protocol to a communications protocol used to communicate the signal to the at least one other device.
68. The sensing device of clause 67, wherein the communications protocol used by the sensing device to communicate the signal to the at least one other device requires lower power or energy to listen for the signal than the power or energy required to listen for the communication to the remote computing system using the different protocol.
69. The sensing device of any of clauses 61 to 68, wherein the communications protocol with which the signal is communicated comprises a Bluetooth Low Energy (BLE) advertisement.
70. The sensing device of clause 69, wherein communication protocol used by the one or more or each of the plurality of sensing devices to communicate with the remote computing system comprises one or more of: GSM, 3G, 4G, 5G, another cellular communication protocol or Wi-Fi.
71. The sensing device of any of clauses 61 to 70, wherein the at least one sensor comprises at least one of: a motion or presence sensor and/or a door or window opening sensor.
72. An action device for operating as a deterrent and/or verification device of a plurality of devices at a site, the action device being configured to periodically transmit a proof-of-alive signal addressed to a remote computing system on a wide area network (WAN) and the action device being switchable between a lower power mode and a higher power mode, wherein:
   in the lower power mode, the action device is configured to periodically listen for a wireless signal; and
   responsive to receiving at least part of a wireless signal for the action device, the action device is configured to switch from the lower power mode to the higher power mode; and
   responsive to receiving the wireless signal for the action device and a payload in or following the wireless signal, from a sensing device of the plurality of the devices at the site, wherein the payload comprises at least one action the action device is commanded to perform, perform the at least one action, the at least one action comprising a deterrent action and/or a threat verification action.
73. The action device of clause 72, wherein:
   listening for a wireless signal comprises listening for a preamble of the wireless signal; and
   receiving at least part of a wireless signal for the action device comprises any one of:
      receiving at least a preamble part of the wireless signal; and
      receiving at least a preamble part and a header part of the wireless signal;
      receiving at least a preamble part, a header part and a payload part of the wireless signal; and
      receiving all of the wireless signal.
74. The action device of clause 72 or 73, wherein the wireless signal for the action device comprises any one of: a unicast signal selecting the action device; a multicast signal selecting the action device; and broadcast signal.
75. The action device of any of clauses 72 to 74, wherein the action device is configured to perform a deterrent action.
76. The action device of clause 72 to 75, wherein, the lower power mode is an intermittent listening mode in which the action device periodically listens for the wireless signal.
77. The action device of any of clauses 80 to 84, wherein the payload is a authenticatable payload that is authenticatable as being from the remote computing system.
78. The action device of clause 85, wherein the action device is configured to receive the authenticatable payload from the remote computing system indirectly via the sensing device.
79. The action device of any of clauses 80 to 86, wherein the action device is configured to receive the signal from the sensing device using a communications protocol that requires lower power or energy to listen for than the power or energy required to listen for at least one or each of: a GSM, 3G, 4G, 5G, other cellular communication protocol or Wi-Fi wake-up signal or for a lowest power or energy consuming one thereof.
80. The action device of clause 87, wherein the communications protocol with which the signal is communicated comprises a Bluetooth Low Energy (BLE) advertisement.
81. The action device of any of clauses 72 to 80 wherein the arm-aware device is configured to, upon receiving the wireless signal, perform an action or not perform an action depending on the arming status.
82. The action device of clause 81 wherein the payload is in said wireless signal.
89. A computing system for servicing multiple devices at a site, the multiple devices comprising at least one sensing device and at least one action device, the computing system acting as a remotely located control hub for each device of the multiple devices, wherein acting as a remotely located control hub includes verifying, for each device of the multiple devices, that within a predefined period, at least one proof-of-alive signal bearing a unique identifier of the device is received by the computing system over a wide area network, WAN, the computing system being further configured to:
   receive an event notification over the WAN the event notification comprising a WAN address of a first device of the multiple devices that transmitted the event notification;
   identify, based on the event notification, which of the plurality of devices the notification was received from;
   responsive to (i) an event defined in the event notification and (ii) which of said devices is identified, determining if an action is to be performed by one or more action devices;
   responsive to determining that the action is to be performed by the one or more action devices, transmitting one or more of: an indication of the action, an indication of the one or more action devices to be used to perform the action and/or an indication that the one or more action devices are to be exited from a low power mode.
90. The computing system of clause 89, wherein the multiple devices comprises a plurality of sensing devices, each sensing device comprising:
   at least one sensor for sensing an event; and
   a communications system;
      wherein, responsive to sensing the event, the sensing device is configured to:
      communicate, using the communications system, an event notification.
91. The computing system of clause 89 or clause 90, wherein the multiple devices comprises a plurality of action devices for operating as deterrent and/or verification devices.
92. The computing system of any of clauses 89 to 91, comprising or configured to communicate with data storage that is configured to store (i) WAN addresses and/or (ii) identifiers for looking up said WAN addresses of all of said multiple devices, and upgrade software of each of the said multiple devices by communications that use a respective one or both of the WAN or the identifier for looking up the WAN.
93. The computing system of clause 92, wherein the data storage is further configured to store an identifier for identifying the site and configuration information defining conditions upon which different actions are to be performed in response to which events occurring at the site, wherein said action is determined based on said configuration information and said event notification.
94. The computing system of any of clauses 89 to 93, wherein the event notification is received from at least one of the one or more action devices and the computing system is configured to transmit to the at least one of the one or more action devices the one or more of: the indication of the action, the indication of the one or more action devices to be used to perform the action and/or the indication that the one or more action devices are to be exited from a low power mode.
95. The computing system of any of clauses 89 to 94, wherein the event notification is received from at least one sensing device that is separate from the action devices and the computing system is configured to transmit to the at least one sensing device the one or more of: the action, the indication of the one or more action devices to be used to perform the action and/or the indication that the one or more action devices are to be exited from a low power mode.
96. The computing system of clause 95, wherein the computing system is configured to transmit both the action and the indication of the one or more action devices to be used to perform the action to the at least one sensing device.
97. The computing system of clause 95, wherein the computing system is configured to:
   transmit the indication of the one or more action devices to be used to perform the action to the at least one sensing device;
   subsequently receive a request for an action from the one or more action devices to be used to perform the action; and
   thereafter transmit at least the action to be performed to the one or more action devices.
98. The computing system of any of clauses 89 to 97 wherein the computing system is configured to provide an alert or other form of user or operator notification if a timing condition in relation to the computing system receiving proof-of-alive signals from a device configured to periodically send proof-of-alive signals on the WAN is not met.
99. The computing system of any of clauses 89 to 98 wherein the computing system is configured to provide an alert or other form of user or operator notification if a condition concerning a parameter in a status report included in a proof-of-alive signal of said at least one proof of alive signals is not met.
100. The computing system of any of clauses 89 to 99 wherein the computing remote is configured to provide an alert or other form of user or operator notification if it does not receive a proof-of-alive signal from a site-installed device that is expects to be present and alive within a set period of time from the last proof-of-alive signal from that device.
101. A system comprising a plurality of devices configured for use at a site, the plurality of devices comprising:
   one or more sensing devices; and
   one or more other devices for performing an action commanded by a remote computing system; wherein
   each of the one or more sensing devices comprises at least one sensor for sensing an event and a communications system for communicating a wireless signal for at least one of the one or more other devices of the plurality of devices at the site to perform a wakeup response comprising exiting from a low power mode, wherein each device of the one or more other devices is configured to exit from the low power mode responsive to receiving at least part of a wireless signal for the device to perform the wakeup response from a device of said sensing devices,
   and wherein the one or more sensing devices is a plurality of sensing devices, wherein a device of said one or more other devices is wake-able by communication of the wireless signal by any one of the plurality of sensing devices.
102. A system comprising a plurality of devices configured for use at a site, the plurality of devices comprising:
   one or more sensing devices; and
   one or more other devices for performing an action commanded by a remote computing system; wherein
   each of the one or more sensing devices comprises at least one sensor for sensing an event and a communications system for communicating a wireless signal for at least one of the one or more other devices of the plurality of devices at the site to perform a wakeup response comprising exiting from a low power mode, wherein each device of the one or more other devices is configured to exit from the low power mode responsive to receiving at least part of a wireless signal for the device to perform the wakeup response from a device of said sensing devices,
   and wherein the wireless signal is configured trigger a plurality of the one or more other devices to perform wakeup responses.
103. A system comprising a plurality of devices configured for use at a site, the plurality of devices comprising:
   one or more sensing devices; and
   one or more other devices for performing an action commanded by a remote computing system; wherein
   each of the one or more sensing devices comprises at least one sensor for sensing an event and a communications system for communicating a wireless signal for at least one of the one or more other devices of the plurality of devices at the site to perform a wakeup response comprising exiting from a low power mode, wherein each device of the one or more other devices is configured to exit from the low power mode responsive to receiving at least part of a wireless signal for the device to perform the wakeup response from a device of said sensing devices,
   and wherein the one or more of the other devices comprises at least one output-generating device for performing at least one deterrent output action.
104. A method of operating the system of any of clauses 1 to 60 or 100 to 103, the method comprising:
   sensing an event using the sensor of at least one of the plurality of sensing devices; and
   communicating a wireless signal from the at least one of the plurality of sensing devices for the one or more other devices of the plurality of devices at the site to perform a wakeup response comprising exiting from a low power mode.
105. A method of operation of the sensing device of any of clauses 61 to 71, the method comprising:
   sensing an event;
   responsive to the sensing of the event, communicating, using the sensing device, an event notification for a remote computing device over a wide area network;
   receiving a response from the remote computing system after the event notification has been communicated; and
   based on the response from the remote computing system, communicating, using the sensing device, a signal for at least one other device of the plurality of devices at the site to perform a wakeup response comprising exiting from a low power mode.
106. A method of operation of an action device of any of clauses 72 to 82, the method comprising:
   when the action device is in the lower power mode, periodically listening for a wireless signal;
   responsive to receiving the at least part of a wireless signal for the action device, switching the action device from the lower power mode to the higher power mode; and
   responsive to receiving the wireless signal for the action device and a payload in or following the wireless signal, from a sensing device of the plurality of the devices at the site, wherein the payload comprises at least one action the action device is commanded to perform, performing the at least one action.
107. A computer program product configured such that, when implemented on a processing system, causes the processing system to perform the method of any of clauses 104 to 106.
108. A computer readable data carrier comprising instructions which, when executed by a computer, cause the computer to carry out the method of any one of clauses 104 to 106.
109. A computer readable data carrier of clause 108 wherein the data carrier consists of a non-transient computer readable storage medium.
110. A computer readable data carrier of clause 108 wherein the data carrier comprises a computer receivable signal.

## Claims

1. A sensing device for operating as a device of a plurality of devices at a site, the sensing device comprising:
at least one sensor for sensing an event;
a communications system;
wherein, responsive to sensing the event, the sensing device is configured to:
communicate, using the communications system, an event notification for a remote computing system, the communication comprising transmission from the sensing device of (i) a wide area network (WAN) address for locating the remote computing system, and/or (ii) an identifier for looking up said address;
wherein the sensing device, responsive to sensing an event:
(i) communicates a wireless signal for at least one other device of the plurality of devices at the site to perform a wakeup response comprising exiting from a low power mode; and
(ii) transmits an event notification to the remote computing system, the event notification being transmitted with one or both of: a WAN address for reaching the remote computing system or an identifier for looking up the WAN address.

2. The sensing device of claim 1, wherein:
the communication system is configured to communicate the signal using a communications protocol that requires lower power or energy to listen than the power or energy required to listen for at least one or each of: a GSM, 3G, 4G, 5G, other cellular communication protocol or Wi-Fi wake-up signal or for a lowest power or energy consuming one thereof.

3. The sensing device of claim 1 or 2, wherein the sensing device is configured to communicate with the remote computing system using a different communications protocol to a communications protocol used to communicate the signal to the at least one other device.

4. The sensing device of claim 3, wherein the communications protocol used by the sensing device to communicate the signal to the at least one other device requires lower power or energy to listen for the signal than the power or energy required to listen for the communication to the remote computing system using the different protocol.

5. The sensing device of any of claims 1 to 3, wherein the communications protocol with which the signal is communicated comprises a Bluetooth Low Energy (BLE) advertisement.

6. The sensing device of claim 5, wherein communication protocol used the sensing device to communicate with the remote computing system comprises one or more of: GSM, 3G, 4G, 5G, another cellular communication protocol or Wi-Fi.

7. The sensing device of any of claims 1 to 6, wherein the at least one sensor comprises at least one of: a motion or presence sensor and/or a door or window opening sensor.

8. A system comprising a plurality of devices configured for use at a site, the plurality of devices comprising:
one or more sensing devices, the one or more sensing devices comprising the sensing device of any one of claims 1 to 7; and
one or more other devices for performing an action commanded by the remote computing system recited in any one of claims 1 to 7; wherein
each of the plurality of devices is configured to periodically send a proof-of-alive signal to the remote computing system on a wide area network, WAN, the proof of alive signal comprising a WAN address of the remote computing system and/or an identifier for determining the WAN address;
each of the one or more sensing devices comprises at least one sensor for sensing an event and a communications system for communicating a wireless signal for at least one of the one or more other devices of the plurality of devices at the site to perform a wakeup response comprising exiting from a low power mode, wherein each device of the one or more other devices is configured to exit from the low power mode responsive to receiving at least part of a wireless signal for the device to perform the wakeup response from a device of said sensing devices,
wherein the at least one of the one or more other devices comprises said at least one other device recited in any one of claims 1 to 7.

9. The system of claim 8, wherein the remote computing system receives the event notification and determines whether an action or additional action is required, or whether data is required from the action device in relation to an action the action device has performed or will be instructed to perform, and:
if an action or additional action is required, or if data is required from the action device in relation to an action the action device has performed or will be instructed to perform, the action commanded by the remote computing system comprises said action or additional action; or
if data is required from the action device in relation to an action the action device has performed or will be instructed to person, the action commanded by the remote computing system comprises transmitting said data.
